(19) Europäisches Patentamt
European Patent Office
Office européen des brevets

(11) **EP 2 549 466 A1**

## EUROPEAN PATENT APPLICATION
published in accordance with Art. 153(4) EPC

(43) Date of publication:
**23.01.2013 Bulletin 2013/04**

(21) Application number: **10847989.0**

(22) Date of filing: **01.12.2010**

(51) Int Cl.:
*G09G 3/36* (2006.01)          *G02F 1/133* (2006.01)
*G09G 3/20* (2006.01)

(86) International application number:
**PCT/JP2010/071508**

(87) International publication number:
**WO 2011/114583 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2010 JP 2010064574**

(71) Applicant: **Sharp Kabushiki Kaisha
Osaka-shi, Osaka 545-8522 (JP)**

(72) Inventor: **SAITOH, Kohji
Osaka-shi
Osaka 545-8522 (JP)**

(74) Representative: **Goddar, Heinz J.
Boehmert & Boehmert
Pettenkoferstrasse 20-22
80336 München (DE)**

(54) **DISPLAY DEVICE AND DISPLAY DRIVING METHOD**

(57)     A display device includes a display screen in which pixels each made up of at least two rows and two columns of subpixels R, G, B, and W corresponding to a plurality of colors are two-dimensionally disposed so that a desired color is displayed by a combination of the plurality of colors. Horizontal lines in each of which subpixels are aligned in a row direction are scanned so that (i) gate bus lines (Gn+1, Gn+3, etc.) corresponding to horizontal lines each including a specific color subpixel (e.g., W) are selected and (ii) gate bus lines (Gn, Gn+2, etc.) corresponding to horizontal lines each including no specific color subpixel are non-selected, the specific color subpixel being a subpixel of a specific color for which driving is desired.

F I G. 1

EP 2 549 466 A1

## Description

Technical Field

The present invention relates to (i) a display device including a display screen in which pixels each for displaying a single color produced by a combination of a plurality of basic colors are two-dimensionally disposed and (ii) a display driving method for the display device.

Background Art

Flat panel displays such as liquid crystal display devices and organic EL (electroluminescence) display devices have the following advantage. That is, display devices of various screen sizes from a small size to a large size can be reduced in thickness and weight.

For example, in recent years, portable display devices are becoming popular each of which (i) has a screen size similar to a size of a book or a magazine, (ii) includes a memory in which a large amount of book data can be stored, and (iii) allows a user to read the book data in a vehicle as if it were a book or a magazine.

For such portable display devices, improvement in performance for lower power consumption is becoming an important issue.

Patent Literature 1 below discloses a configuration of a display device and a driving method each of which allows a reduction in power consumption.

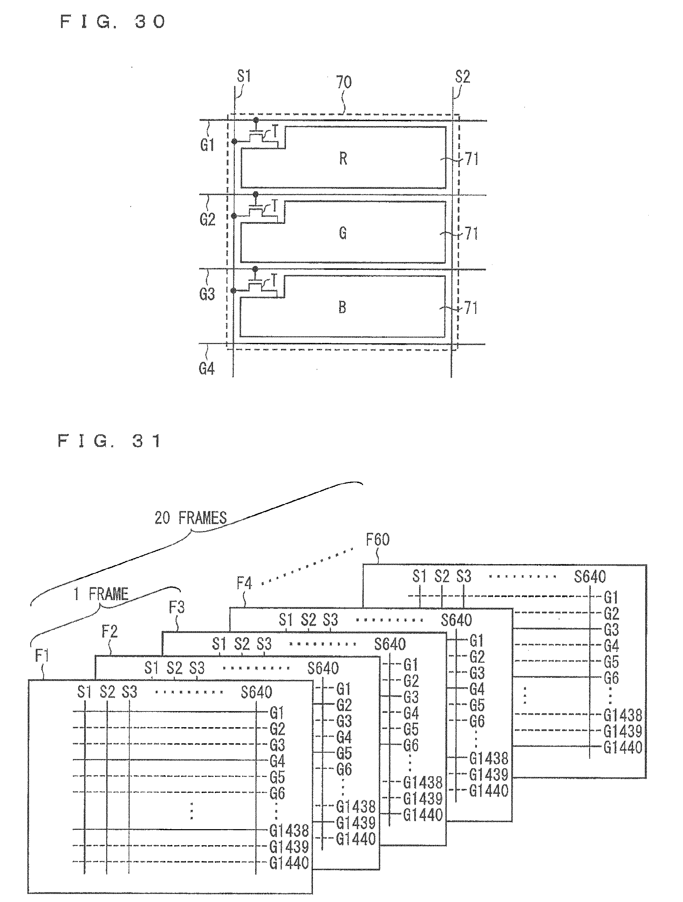

Fig. 30 is a plan view schematically illustrating a pixel configuration called horizontal stripes in a liquid crystal display device. As illustrated in Fig. 30, a single pixel 70 is constituted by regions partitioned by two vertical signal lines S1 and S2 and four horizontal scanning lines G1, G2 G3, and G4.

Further, a pixel electrode 71 is provided, on one of two transparent substrates, in each of (i) a region surrounded by the signal lines S1 and S2 and the scanning lines G1 and G2, (ii) a region surrounded by the signal lines S1 and S2 and the scanning lines G2 and G3, and (iii) a region surrounded by the signal lines S1 and S2 and the scanning lines G3 and G4. To each of these pixel electrodes 71, a thin film transistor T serving as a switching element is connected.

Further, color filters of R (red), G (green), and B (blue) which correspond to the three pixel electrodes 71, respectively, are provided on the other one of the two transparent substrates. Accordingly, as illustrated also in Fig. 31, rows of R are selected by the scanning lines G1, G4, etc., rows of G are selected by the scanning lines G2, G5, etc., and rows of B are selected by the scanning lines G3, G6, etc.

The pixel configuration illustrated in Fig. 30 allows a larger reduction in power consumption as compared with a pixel configuration in which color filters of R, G, and B are aligned along a scanning line in this order. This is because (i) the latter pixel configuration requires only a single scanning line for each pixel but requires three signal lines for each pixel, whereas the former pixel configuration requires three scanning lines for each pixel but requires only a single signal line for each pixel and (ii) the former pixel configuration is therefore higher in effect of reducing power consumption of a source driver for driving signal lines.

Note that a source driver converts a multi-bits (e.g., 8 bits) input digital signal into an analog signal and supplies the analog signal as a source signal, and therefore consumes a larger amount of power and more expensive than a gate driver which supplies a scan signal of 1 bit.

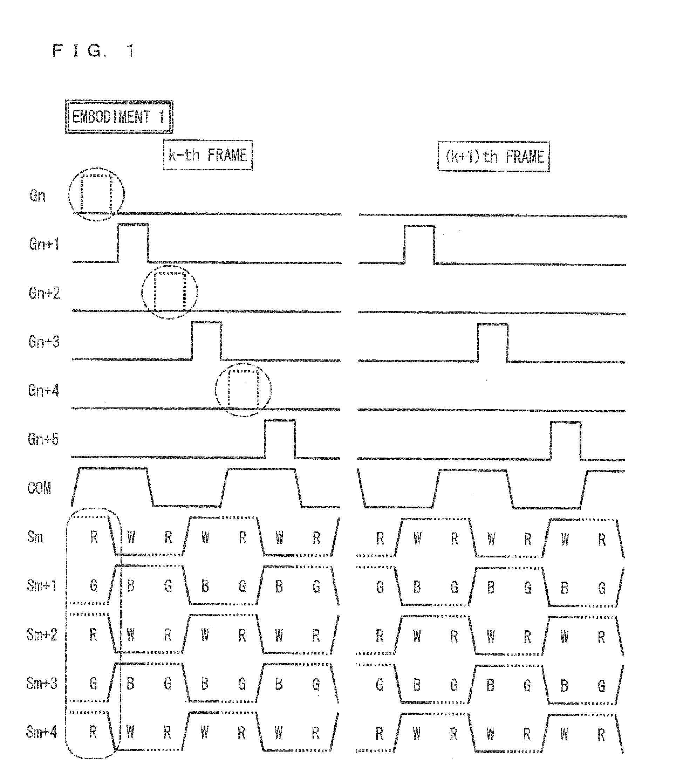

In addition, Patent Literature 1 discloses a driving method arranged to further reduce power consumption. For example, Fig. 31 is a concept view showing a relationship between a frame frequency and a field in a case where a liquid crystal display device is driven. As illustrated in Fig. 31, 1 frame which is image display information is divided into the same number of fields as or a larger number of fields than the basic colors (R, G, and B). In a first field (F1), the rows of R are sequentially scanned with the use of the scanning lines G1, G4, etc. while skipping the scanning lines for scanning the rows of G and B. Similarly, in a second field (F2), the rows of G are sequentially scanned with the use of the scanning lines G2, G5, etc. while the rows of R and B are not scanned, and in a third field (F3), the rows of B are sequentially scanned with the use of the scanning lines G3, G6, etc. while the rows of R and G are not scanned.

As for a scanning frequency, a frame frequency is set to 20 Hz (50 ms) and a field frequency is set to 60 Hz (approximately 16.7 ms). In each field, the scanning lines are scanned while skipping two scanning lines at a time. As a result, the scanning frequency is 1/3 of that of a case where all of the scanning lines are sequentially scanned in each field.

Accordingly, a general gate driver designed for the configuration in which a single scanning line is provided for each pixel can be used as it is without changing the scanning frequency since the scanning frequency is reduced to 1/3 although three scanning lines are necessary for each pixel. As a result, the increase in the number of scanning lines does not affect the above-mentioned effect of reducing power consumption of a source driver.

Citation List

Patent Literature 1

Japanese Patent Application Publication, Tokukaihei, No. 10-228263 A (Publication Date: August 25, 1998)

Summary of Invention

Technical Problem

However, the technique of Patent Literature 1 undesirably cannot achieve a sufficient reduction in power consumption of a display device.

Specifically, according to the technique of Patent Literature 1, the frame frequency is set to 20 Hz. This means that it takes 50 ms to rewrite a single screen. Accordingly, a human eye perceives flickering for each color.

In a case where scan of all of the scanning lines is finished in a state in which 1 frame is set to 16.7 ms (60 Hz), it is necessary to increase the scanning frequency three times (180 Hz) and to reduce a period of time of each field to 1/3. In this case, power consumption which depends on frequencies of the source driver, the gate driver, etc. increases. Consequently, a sufficient reduction in power consumption cannot be achieved.

The present invention was attained in view of the above problems, and an object of the present invention is to provide a display driving method and a display device which allow a reduction in power consumption.

Solution to Problem

In order to attain the above object, a display device of the present invention includes:

(1) a display screen in which pixels each made up of at least two rows and two columns of subpixels corresponding to a plurality of colors are two-dimensionally disposed so that a desired color is displayed by a combination of the plurality of colors;
(2) a source driver for driving source bus lines each of which supplies a source signal to subpixels, out of The subpixels, that are aligned in a column direction; and
(3) a gate driver for driving gate bus lines each of which supplies a gate signal for selecting subpixels, out of the subpixels, that are aligned in a row direction,
(4) the gate driver driving the gate bus lines so that, out of horizontal lines which are scanned by the gate driver and in each of which subpixels are aligned in the row direction, (i) horizontal lines each including a specific color subpixel are selected and (ii) horizontal lines each including no specific color subpixel are non-selected, the specific color subpixel being a subpixel of a specific color for which driving is desired.

In the arrangement, 1 pixel is constituted by at least two rows and two columns of subpixels that correspond to the plurality of colors, respectively. Out of the plurality of subpixels constituting 1 pixel, a subpixel having a color for which driving is desired is set as a specific color subpixel. For example, it is assumed that (i) the plurality of colors are red (R), green (G), blue (B), and white (W), (ii) any one of these colors is selected, and (iii) a source signal (display signal) is supplied, via a source bus line, to a subpixel (the specific color subpixel) corresponding to the color thus selected.

The two rows and two columns of subpixels include at least one row including the specific color subpixel and at least one row including no specific color subpixel. Specifically, for example, out of the two rows and two columns of subpixels, the subpixels R and G are aligned in a first row, and the subpixels W and B are aligned in a second row.

With such a pixel configuration, the gate driver drives the gate bus lines so that, out of lines (referred to as "horizontal lines" for convenience of description) which are scanned by the gate driver and in each of which subpixels are aligned in the row direction, (i) horizontal lines each including the specific color subpixel are selected and (ii) horizontal lines each including no specific color subpixel are non-selected.

Accordingly, in 1 vertical period (1 frame), a period (selection period) in which the gate driver outputs a gate signal of a high level and a period (non-selection period) in which no gate signal of a high level is outputted are provided.

Consequently, it is possible to achieve a low-power drive mode in which power consumption is lowered due to the presence of the non-selection period, as compared with a normal display mode in which the gate driver sequentially drives all of the gate bus lines.

In the low-power drive mode, for example, it is possible to provide an image in which information is displayed in two colors. One of the two colors serves as a background color, and is, for example, a color expressed by a sum of (a) the subpixels of the plurality of colors aligned in the horizontal lines that have not been selected and (b) the subpixel that is not the specific color subpixel out of the subpixels of the plurality of colors aligned in the horizontal lines that have been selected. The other of the two colors is, for example, a color expressed in a case where, for example, a high voltage is applied to liquid crystals of the specific color subpixel out of the subpixels of the plurality of colors aligned in the horizontal lines that have been selected.

Note that the present invention is not limited to an embodiment in which the selection period and the non-selection period are alternated (so-called interlace scan). That is, there is no restriction on how the selection period and the non-selection period are allocated in 1 frame.

The display device is every type of display device in which each pixel is constituted by at least two rows and two columns of subpixels corresponding to a plurality of colors.

A display driving method of the present invention is (1) a display driving method for driving a display device in which a plurality of pixels are two-dimensionally disposed on a display screen and each of the plurality of pixels is made up of at least two rows and two columns of subpixels corresponding to a plurality of colors so that a desired color is displayed by a combination of the plurality of colors,

(2) the display driving method including the step of scanning horizontal lines in each of which subpixels are aligned in a row direction so that, out of the horizontal lines, (i) horizontal lines each including a specific color subpixel are selected and (ii) horizontal lines each including no specific color subpixel are non-selected, the specific color subpixel being a subpixel of a specific color for which driving is desired.

This makes it possible to achieve a low-power drive mode in which power consumption is lowered due to the non-selection period provided in 1 frame, as compared with a normal display mode in which all of the horizontal lines are sequentially driven, as has been already described.

Note that a combination of a feature recited in a certain claim and a feature recited in another claim is not limited to a combination with a feature recited in a claim from which the certain claim depends, and a combination with a feature recited in a claim from which the certain claim does not depend is possible, as long as the object of the present invention is achieved.

Advantageous Effects of Invention

As described above, the display device of the present invention includes: a display screen in which pixels each made up of at least two rows and two columns of subpixels corresponding to a plurality of colors are two-dimensionally disposed so that a desired color is displayed by a combination of the plurality of colors, and the gate driver driving the gate bus lines so that, out of horizontal lines which are scanned by the gate driver and in each of which subpixels are aligned in the row direction, (i) horizontal lines each including a specific color subpixel are selected and (ii) horizontal lines each including no specific color subpixel are non-selected, the specific color subpixel being a subpixel of a specific color for which driving is desired.

It is therefore possible to achieve a low-power drive mode in which power consumption is lowered as a result of non-selection of the horizontal lines each including no specific color subpixel, as compared with a normal display mode in which all of the horizontal lines are sequentially driven.

Brief Description of Drawings

Fig. 1
Fig. 1 is a timing chart illustrating timings of gate signals and source signals in an embodiment of a low-power drive mode.
Fig. 2

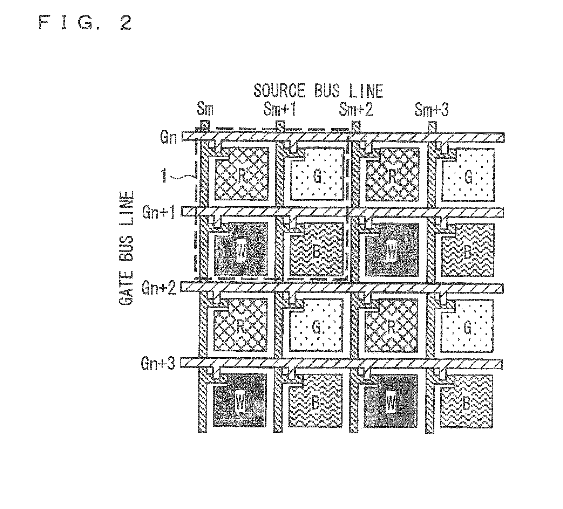

Fig. 2 is a plan view schematically illustrating an exemplary pixel configuration.
Fig. 3

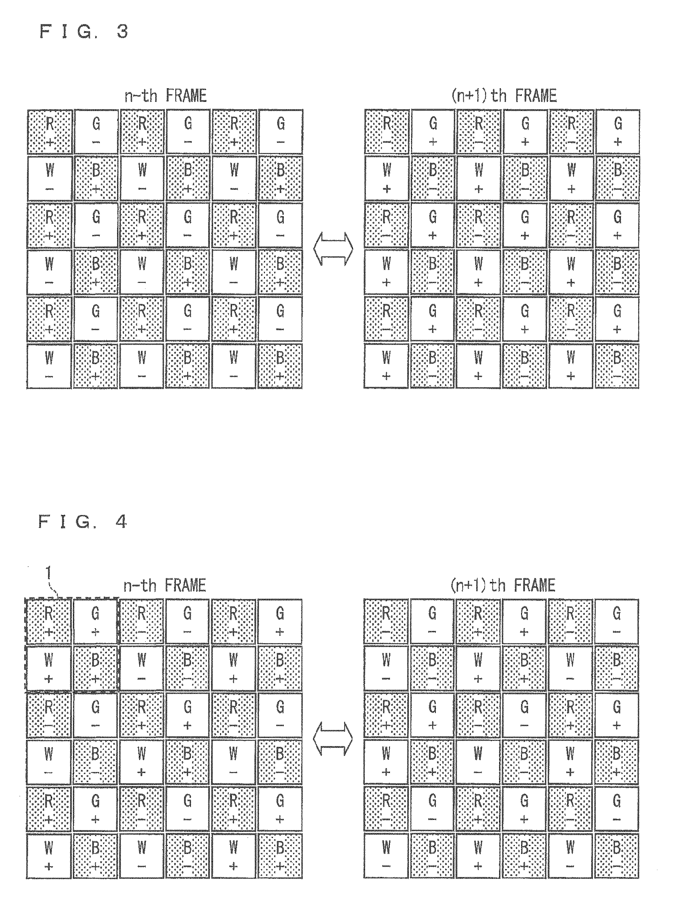

Fig. 3 is an explanatory view illustrating how polarities of the respective subpixels are inverted in two successive frames in a case where dot inversion driving in which 1 subpixel serves as 1 dot is carried out as one form of polarity inversion driving of a liquid crystal display device in which each pixel is made up of two rows and two columns subpixels R, G, B, and W.
Fig. 4
Fig. 4 is an explanatory view illustrating how polarities of the respective subpixels are inverted in two successive frames in a case where dot inversion driving in which 1 pixel serves as 1 dot is carried out as another form of the polarity inversion driving.
Fig. 5

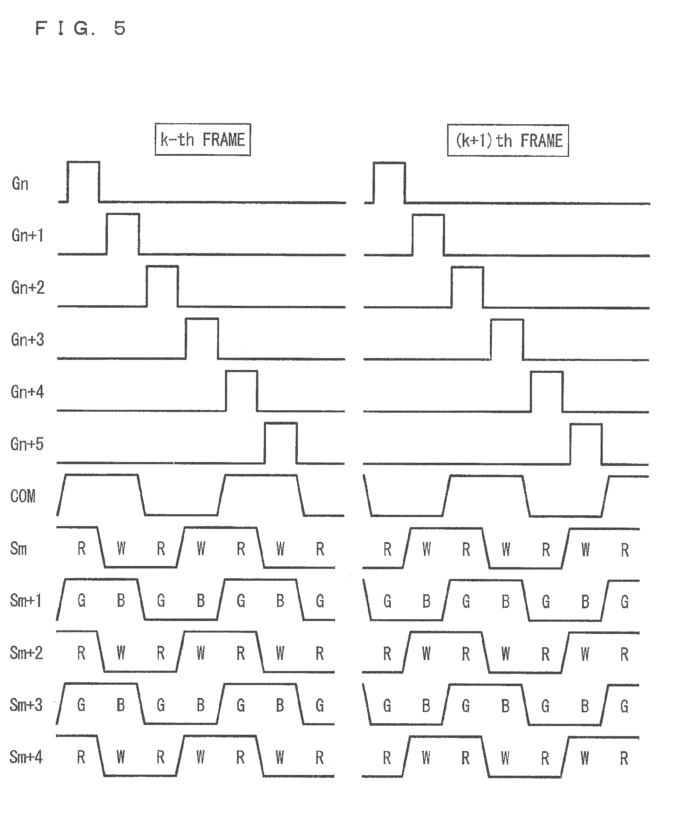

Fig. 5 is a timing chart illustrating timings of gate signals and source signals in a normal drive mode.
Fig. 6

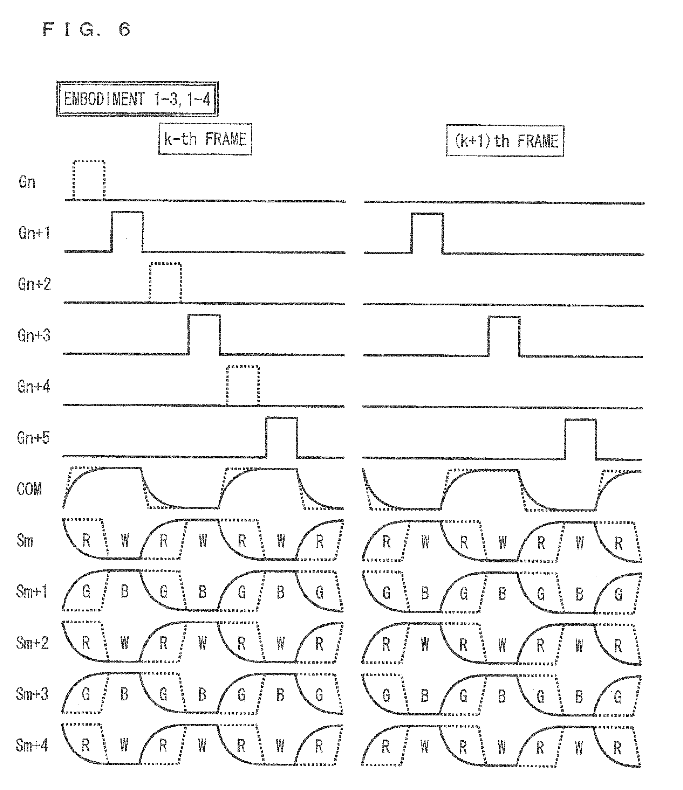

Fig. 6 is a timing chart illustrating timings of gate signals and source signals in another embodiment of the low-power drive mode.
Fig. 7

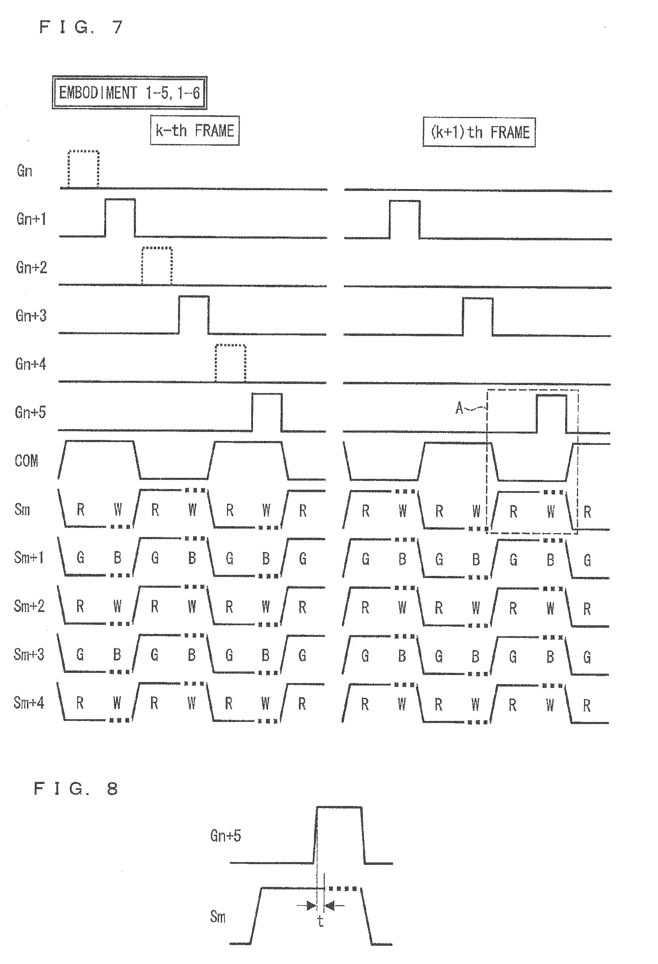

Fig. 7 is a timing chart illustrating timings of gate signals and source signals in still another embodiment of the low-power drive mode.
Fig. 8
Fig. 8 is an explanatory view illustrating a timing at which an output of a source signal with respect to a gate signal.
Fig. 9

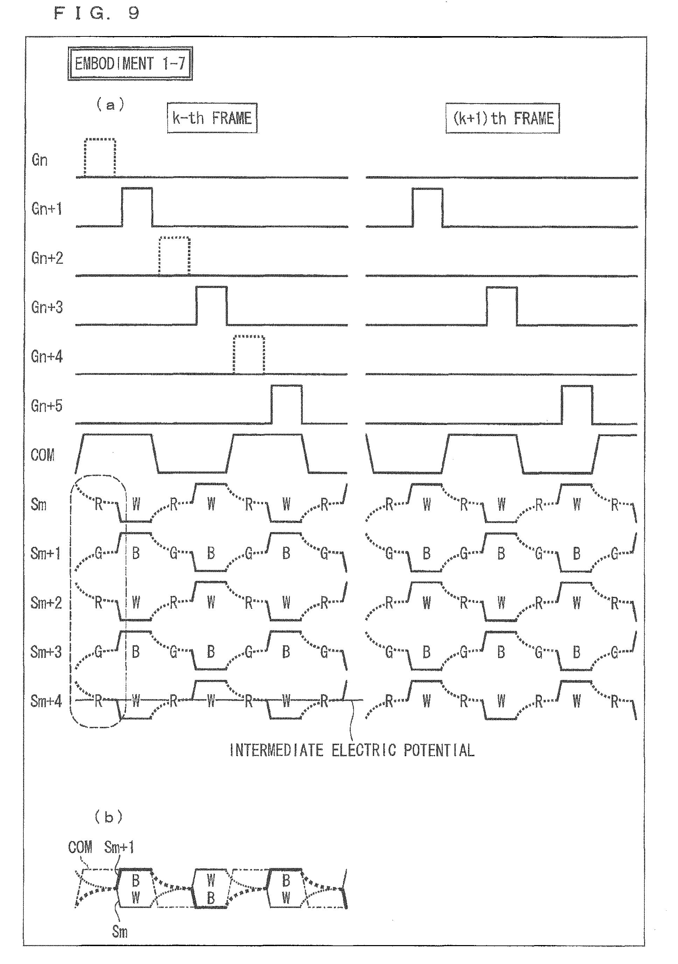

Fig. 9 is a timing chart of still another embodiment of the low-power drive mode. (a) of Fig. 9 illustrates timings of a gate signal and a source signal in the still another embodiment of the low-power drive mode, and (b) of Fig. 9 illustrates a relationship between a change of electric potentials of connected source bus lines and a common electric potential Vcom.
Fig. 10

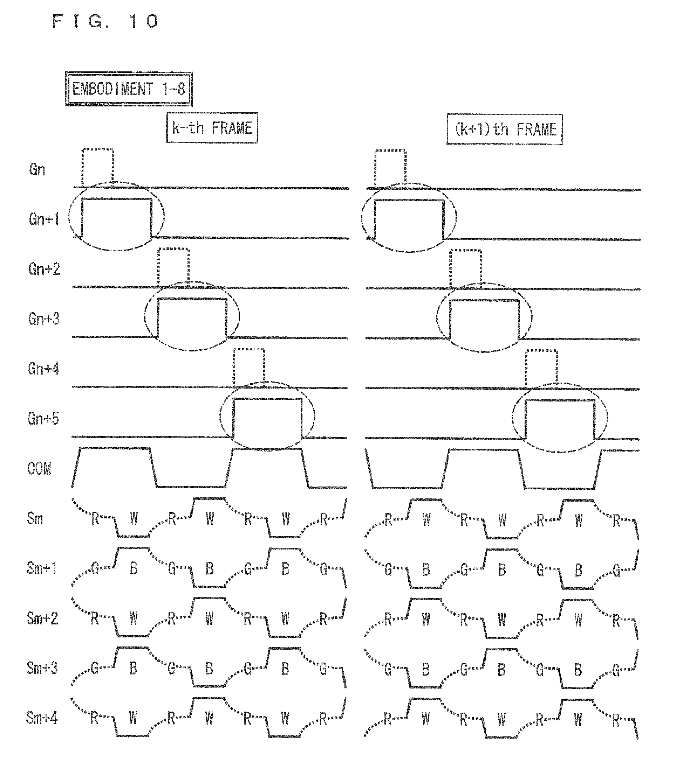

Fig. 10 is a timing chart illustrating timings of gate signals and source signals in still another embodiment of the low-power drive mode.
Fig. 11

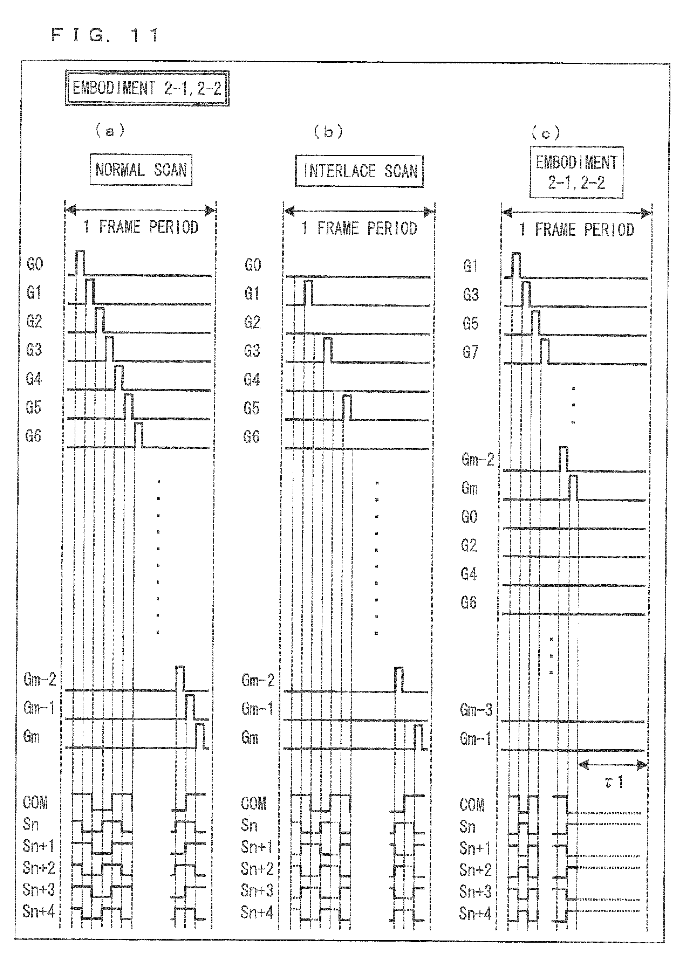

Fig. 11 is a timing chart illustrating an output timing of a gate signal in 1 frame. (a) of Fig. 11 illustrates normal scan, (b) of Fig. 11 illustrates interlace scan, and (c) of Fig. 11 illustrates an output timing of a gate signal in still another embodiment of the low-power drive mode.
Fig. 12

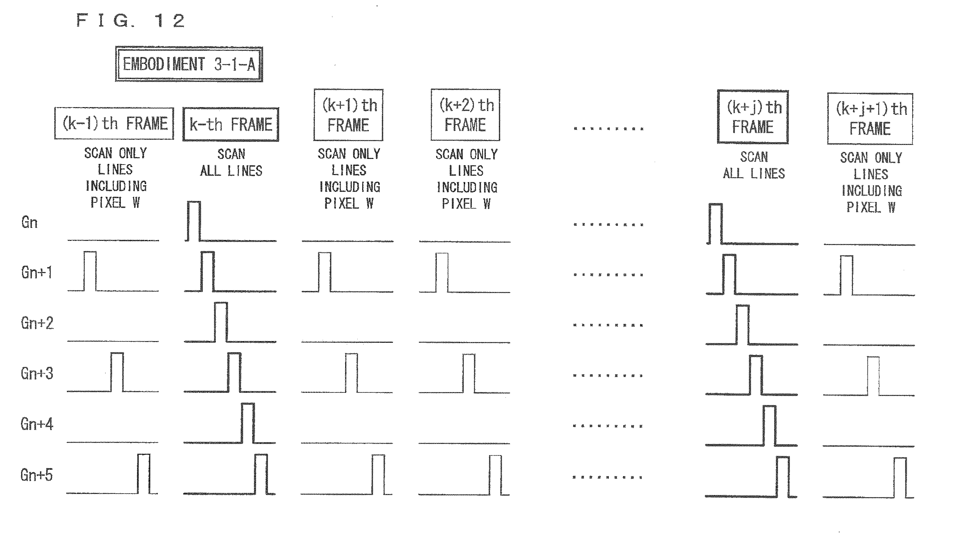

Fig. 12 is a timing chart illustrating an output timing of a gate signal in still another embodiment of the low-power drive mode.
Fig. 13

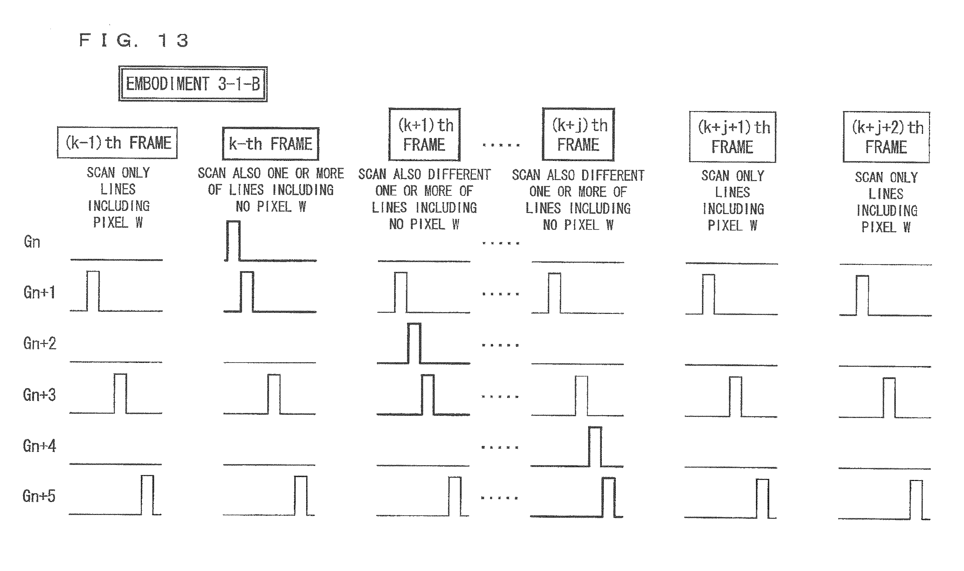

Fig. 13 is a timing chart illustrating an output timing of a gate signal in still another embodiment of the low-power drive mode.
Fig. 14

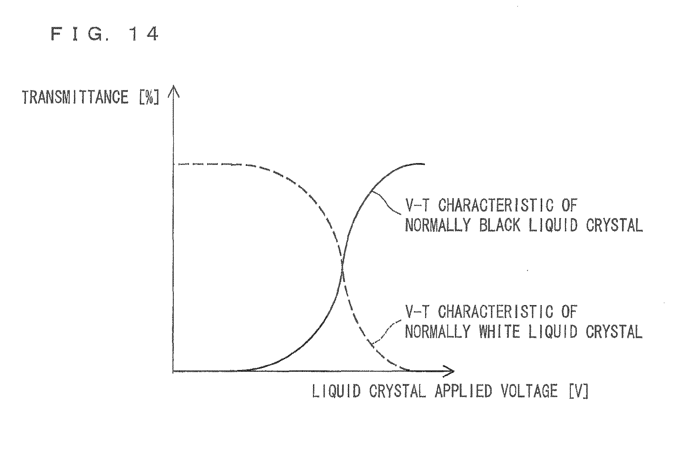

Fig. 14 is a graph showing an applied voltage-optical transmittance characteristic in each of normally white mode and normally black mode liquid crystals.
Fig. 15

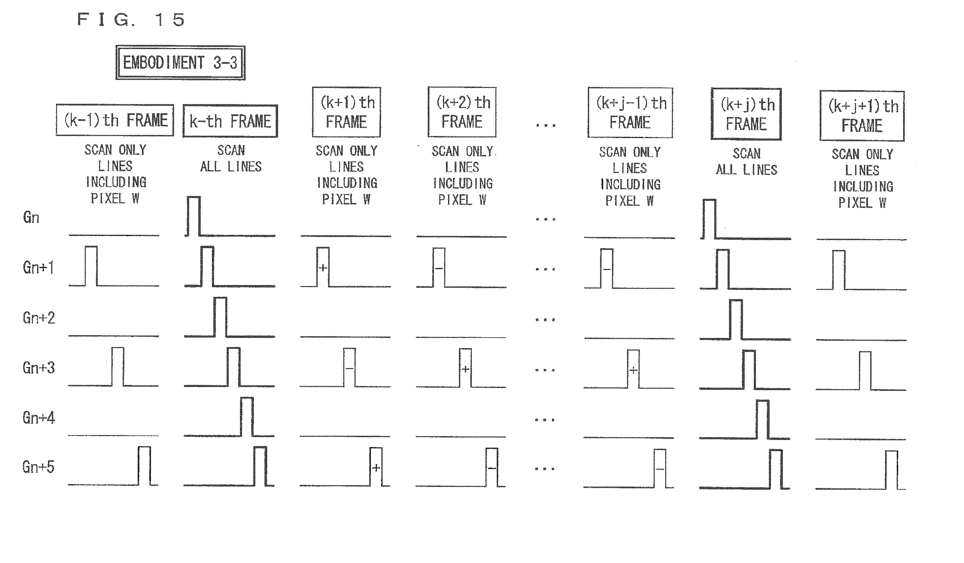

Fig. 15 is a timing chart illustrating an output timing of a gate signal and a polarity of a source signal in still another embodiment of the low-power drive mode.
Fig. 16

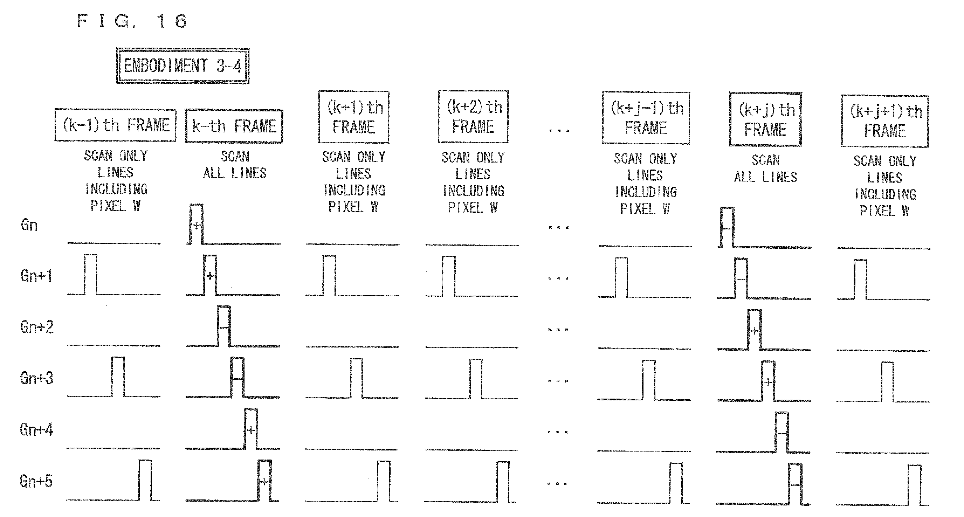

Fig. 16 is a timing chart illustrating an output timing of a gate signal and a polarity of a source signal in still another embodiment of the low-power drive mode.
Fig. 17

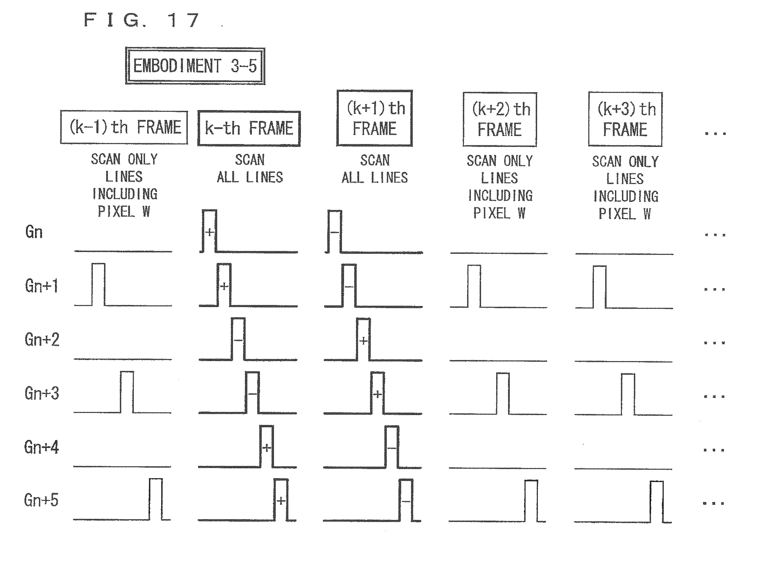

Fig. 17 is a timing chart illustrating an output timing of a gate signal and a polarity of a source signal in still another embodiment of the low-power drive mode.
Fig. 18

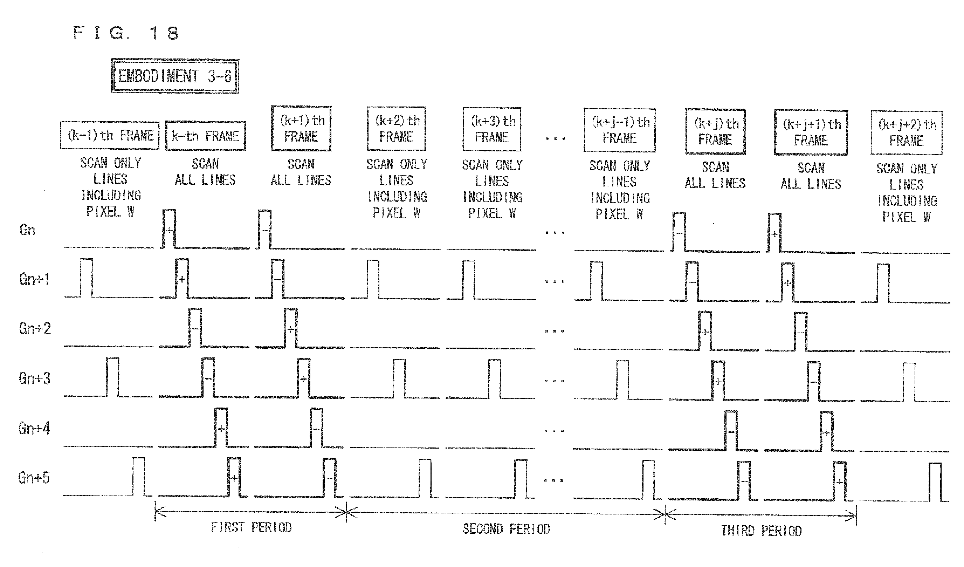

Fig. 18 is a timing chart illustrating an output timing of a gate signal and a polarity of a source signal in still another embodiment of the low-power drive mode.
Fig. 19

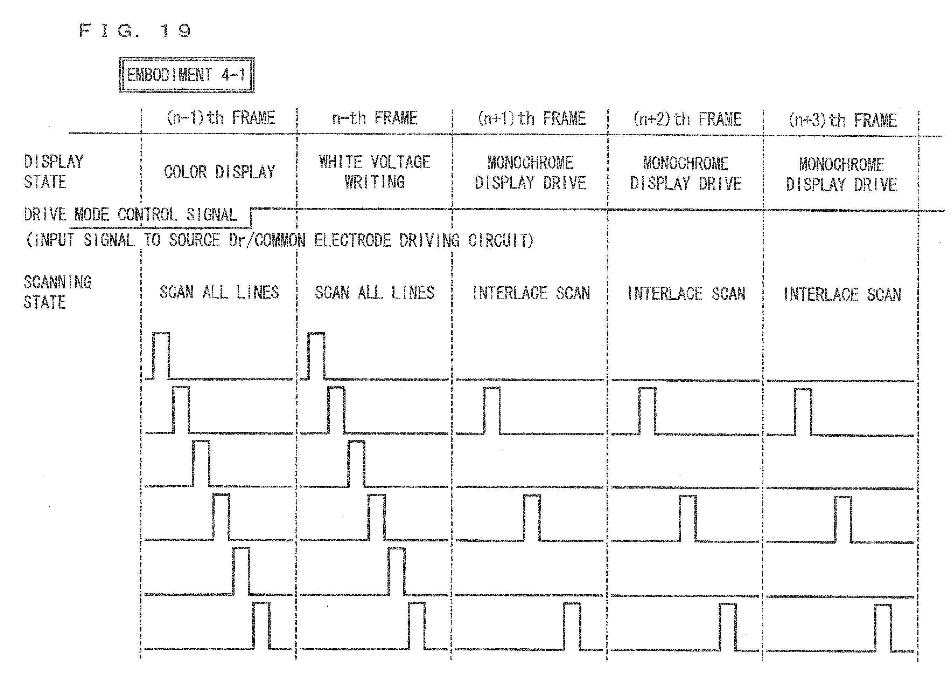

Fig. 19 is a timing chart illustrating an output timing of a gate signal at the time of shift from the full-color display mode to the low-power drive mode.
Fig. 20

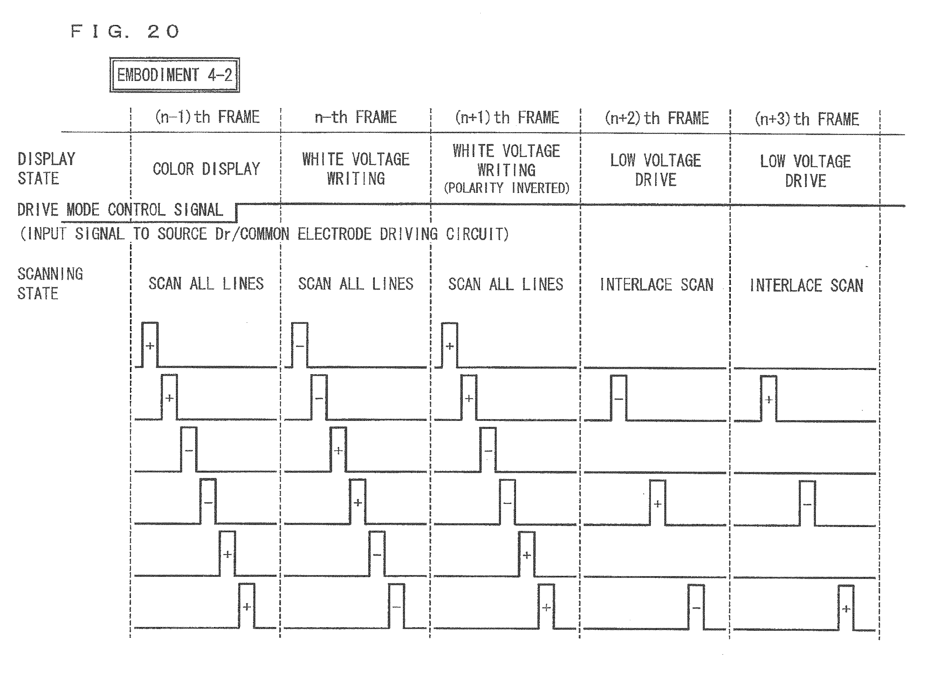

Fig. 20 is a timing chart illustrating an output timing of a gate signal and a polarity of a source signal at the time of shift from the full-color display mode to the low-power drive mode.
Fig. 21

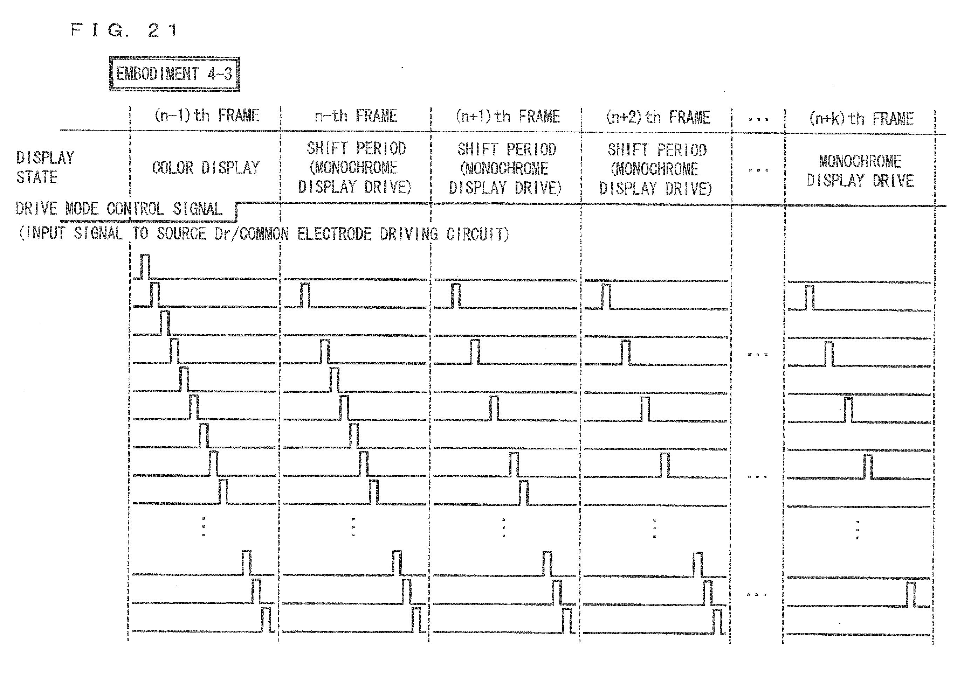

Fig. 21 is a timing chart illustrating an output timing of a gate signal at the time of shift from the full-color display mode to the low-power drive mode.
Fig. 22

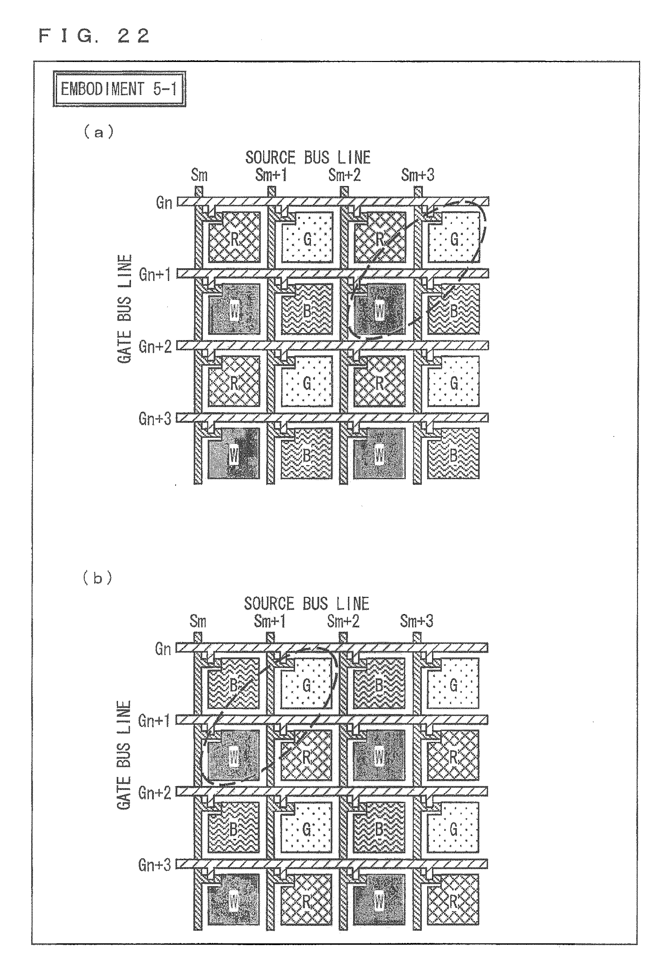

Fig. 22 is a plan view schematically illustrating an example of the way in which subpixels are disposed in 1 pixel.
Fig. 23

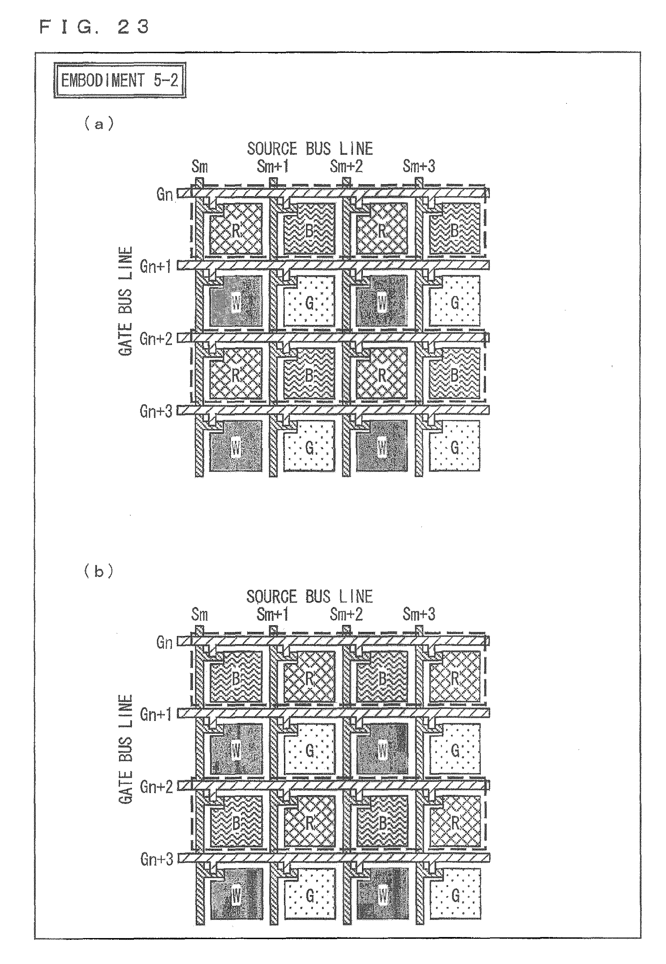

Fig. 23 is a plan view schematically illustrating another example of the way in which subpixels are disposed in 1 pixel.
Fig. 24

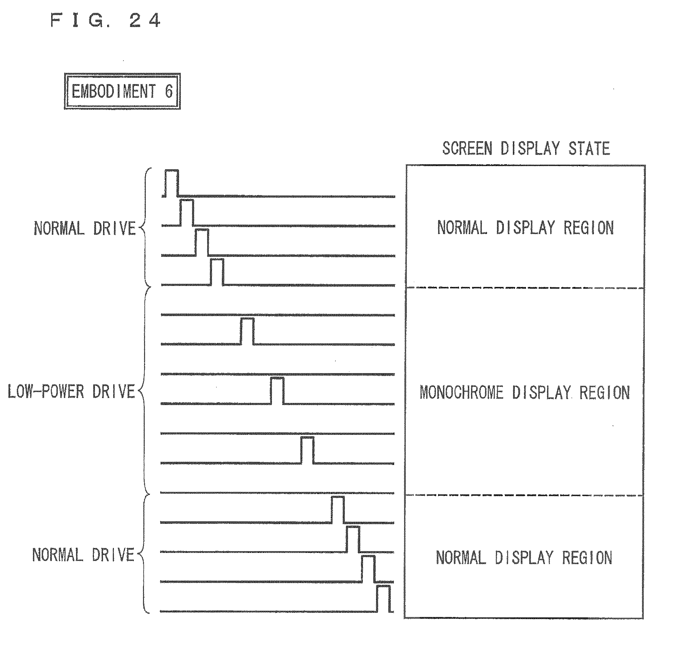

Fig. 24 is an explanatory view illustrating an embodiment in which a display screen is divided into a region for the normal drive mode and a region for the low-power drive mode.
Fig. 25

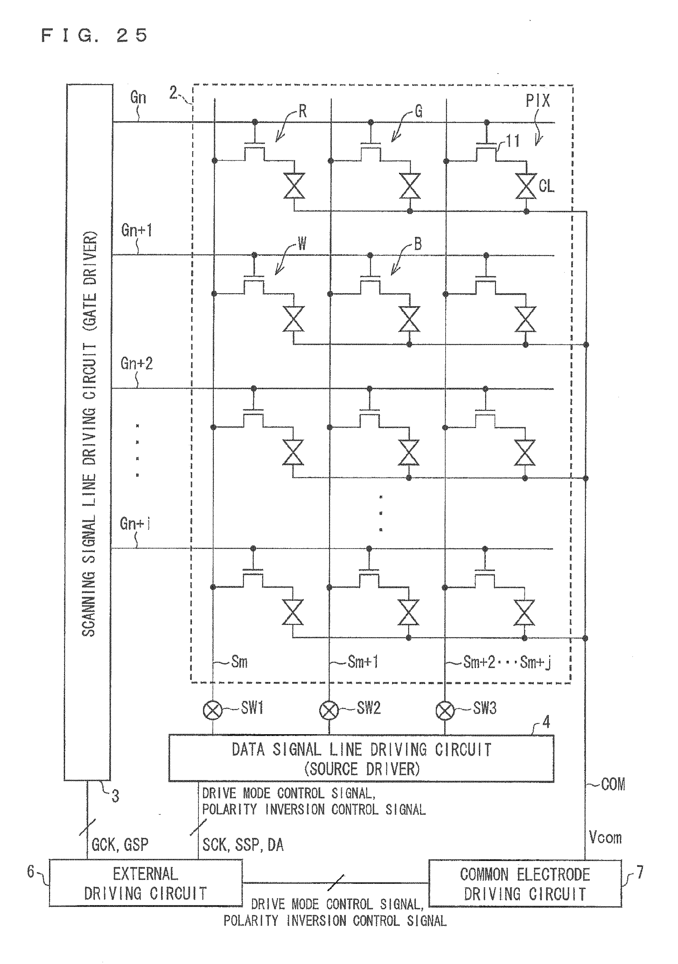

Fig. 25 is a block diagram illustrating a configuration of a liquid crystal display device which is one example of a display device of the present invention.
Fig. 26

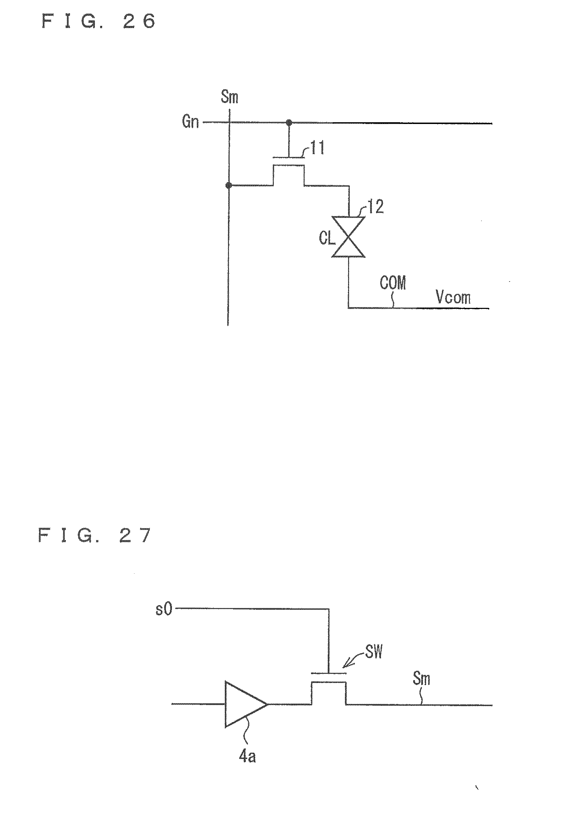

Fig. 26 is a circuit diagram illustrating an equivalent circuit concerning 1 pixel of a liquid crystal display device.
Fig. 27

Fig. 27 is a circuit diagram illustrating an exemplary configuration of a source signal output circuit.
Fig. 28

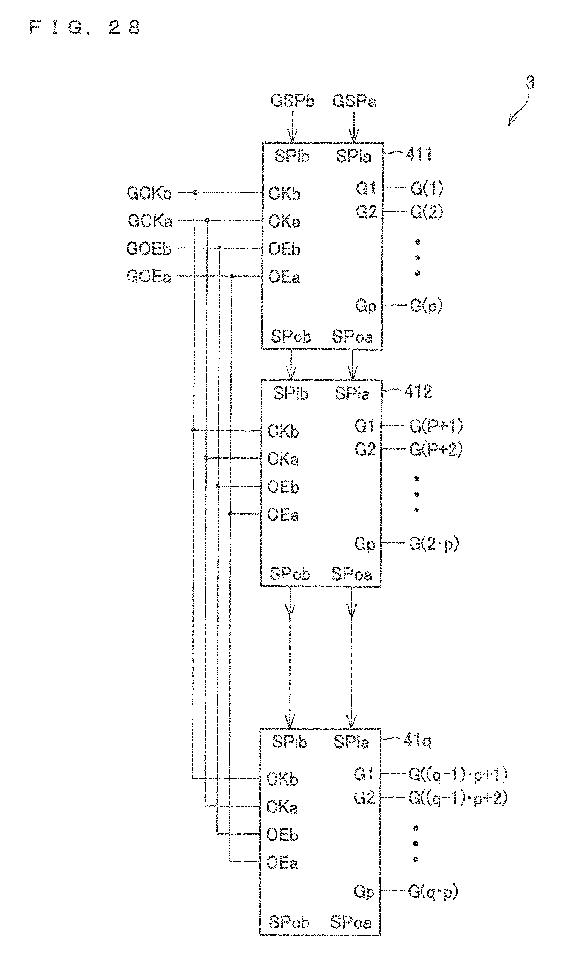

Fig. 28 is a block diagram illustrating an exemplary configuration of a gate driver.
Fig. 29

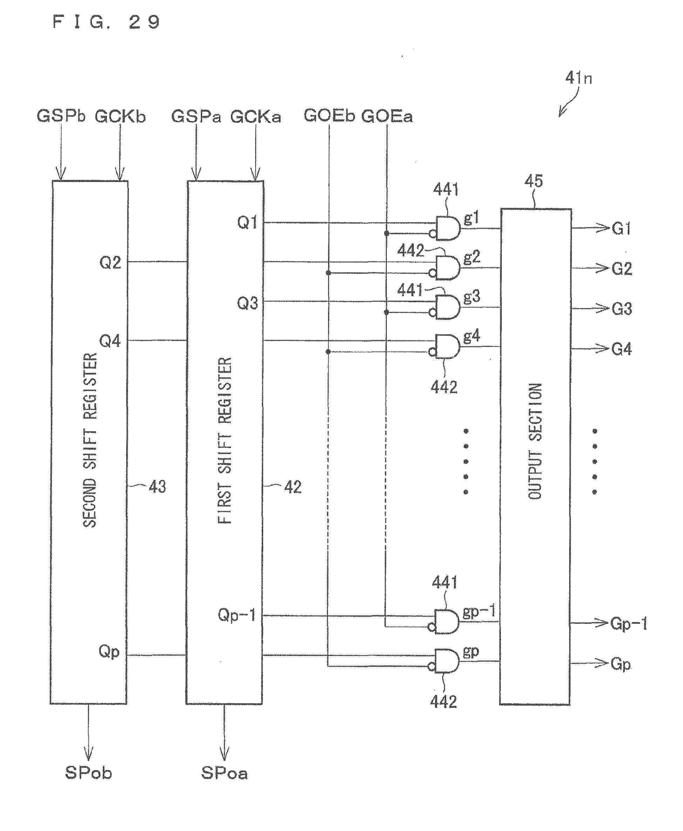

Fig. 29 is a block diagram illustrating an exemplary configuration of a gate driver IC.
Fig. 30

Fig. 30 is a plan view schematically illustrating a pixel configuration called horizontal stripe in a liquid crystal display device.
Fig. 31

Fig. 31 is a concept diagram illustrating a relationship between a frame frequency and a field in a case where a liquid crystal display device is driven.

Description of Embodiments

[Embodiment 1]

An embodiment of the present invention is described below with reference to the drawings. Note that the scope of the present invention concerning dimensions, materials, shapes, and relative positions of constituent members illustrated as an embodiment is not limited to the illustrated arrangement and are merely illustrative examples, unless otherwise specified.

(Pixel Configuration)

A display device of the present invention displays a desired color by a combination of a plurality of colors. For this purpose, pixels each made up of at least two rows and two columns of subpixels corresponding to the plurality of colors are two-dimensionally disposed on a display screen of the display device.

Fig. 2 is a plan view schematically illustrating an exemplary pixel configuration. As illustrated in Fig. 2, each pixel 1 is made up of four subpixels R, G, B, and W which correspond to four colors (red (R), green (G), blue (B), and white (W)), respectively. The subpixels R, G, B, and W are disposed in two rows and two columns, but the order in which the subpixels R, G, B, and W are disposed is not limited in particular. The present embodiment deals with a case where a single subpixel corresponds to a single color. However, the present invention is not limited to this. It is also possible that a plurality of subpixels correspond to a single color, so that each pixel is made up of more than two rows and two columns of subpixels.

In short, it is only necessary that (i) a subpixel (e.g., W) having a color (e.g., white) for which driving is desired in a low-power drive mode (later described) is set as a specific color subpixel and (ii) each pixel includes at least one row including the specific color subpixel and at least one row including no specific color subpixel.

In the present embodiment, the subpixel W is set as the specific color subpixel.

The subpixels R, G, B, and W are separately driven. For this purpose, a single gate bus line Gn+i (n is a natural number and i is an integer of 0 or larger) is provided for each horizontal line in which subpixels are aligned in a row direction, and a single source bus line Sm+j (m is a natural number and j is an integer of 0 or larger) is provided for each vertical line in which subpixels are aligned in a column direction.

(Main Configuration of Display Device)

Fig. 25 is a block diagram illustrating a configuration of a VA (Vertical Alignment) mode liquid crystal display device which is an example of the display device of the present invention. With reference to Fig. 25, the following describes the configuration of the liquid crystal display device, including a more detailed circuit configuration of the subpixels. Note, however, that the present invention is applicable regardless of a liquid crystal mode, and no problem arises even in a case where the liquid crystal mode is an IPS (In-Plane Switching) mode, which is also called a lateral electric field application mode, or a TN (Twisted Nematic) mode.

The present liquid crystal display device is an active matrix type display device, and includes a display section 2, a gate driver 3, a source driver 4, an external driving circuit 6 for controlling driving of the gate driver 3 and the source driver 4, and a common electrode driving circuit 7 (common driver) for controlling driving of a common electrode COM. Note that operations of the source driver 4 and the common electrode driving circuit 7 are controlled by a drive mode control signal (later described) and a polarity inversion control signal that are generated by the external driving circuit 6.

The display section 2 includes the gate bus lines Gn+i and the source bus lines Sm+j that intersect with the gate bus lines Gn+i.

The source driver 4 supplies, to a source bus line Sm, a signal potential whose polarity is inverted every predetermined number of horizontal periods (e.g., two horizontal periods). Further, according to need, the source driver 4 may supply, to two adjacent source bus lines Sm and Sm+1, signal potentials of reverse polarities in an identical horizontal period (identical horizontal scanning period). Further, the source driver 4 carries out AC driving of writing, into a subpixel, a signal potential whose polarity is inverted every 1 frame (1 vertical period or 1 vertical scanning period).

As illustrated in Fig. 26, each of the subpixels R, G, B, and W includes a TFT (Thin Film Transistor) 11 and a liquid crystal capacitor CL. The TFT 11 has a gate connected to the gate bus line Gn, a source connected to the source bus line Sm, and a drain connected to a subpixel electrode 12. The gate driver 3 selectively supplies a gate signal to the gate bus line Gn. This causes TFT whose gate is connected to the gate bus line Gn to switch from OFF to ON. Accordingly, a voltage which corresponds to a potential difference between an electric potential of a source signal and a common electric potential Vcom applied to the common electrode COM is applied from the source bus line Sm to the liquid crystal capacitor CL via the TFT that has been turned on. This causes subpixels to be charged.

The liquid crystal capacitor CL is a capacitor constituted by the subpixel electrode 12, the common electrode COM, and a liquid crystal layer sandwiched between the subpixel electrode 12 and the common electrode COM.

To the common electrode COM, a common electric potential Vcom (common electric potential) generated in a power supply circuit provided in the common electrode driving circuit 7 is applied.

The configurations of the gate driver 3 and the source driver 4 are described later in detail.

(How Polarity of Source Signal is Inverted)

Fig. 3 is an explanatory view illustrating how polarities of the respective subpixels are inverted in two successive frames in a case where dot inversion driving in which 1 subpixel serves as 1 dot is carried out as one form of polarity inversion driving of the liquid crystal display device in which each pixel is made up of two rows and two columns of subpixels R, G, B, and W.

Fig. 4 is an explanatory view illustrating how polarities of the respective subpixels are inverted in two successive frames in a case where dot inversion driving in which 1 pixel serves as 1 dot is carried out as another form of the polarity inversion driving.

In the dot inversion driving illustrated in Fig. 3 in which 1 subpixel serves as 1 dot, a cycle of polarity inversion agrees with repetition of subpixels. As a result, flickering is more likely to occur. More specifically, as to the subpixels R and B for example, all of the subpixels R and B have an identical polarity in a frame (n-th frame), and all of the subpixels R and B have an identical polarity also in a next frame ((n+1)th frame) which polarity is reverse to that in the previous frame (n-th frame). The same phenomenon occurs also for the subpixels W and G.

That is, in the dot inversion driving illustrated in Fig. 3, the way in which polarities of the respective subpixels are inverted is identical to that of frame inversion driving which is likely to cause flickering.

Meanwhile, in the dot inversion driving illustrated in Fig. 4 in which 1 pixel serves as 1 dot, polarities of subpixels having an identical color are spatially averaged in 1 frame. This allows a reduction in flickering. More specifically, as to the subpixels R and B for example, subpixels in each pixel have an identical polarity that is reverse to that in an adjacent pixel in a frame (n-th frame), and subpixels in each pixel have an identical polarity also in a next frame ((n+1)th frame) which polarity is reverse to that in the previous frame (n-th frame).

In a case where subpixels having an identical color have alternate positive and negative polarities in a single frame as described above, flickering becomes less remarkable.

The nature of the present invention is not restricted by the way in which polarities are inverted, and any of dot inversion driving, line inversion driving, source line inversion driving, and frame inversion driving can be used. Note, however, that the following deals with an example in which the dot inversion driving illustrated in Fig. 4 is carried out which is a preferable to the dot inversion driving illustrated in Fig. 3.

(Normal Drive Mode Available for Full-Color Display)

Fig. 5 is a timing chart illustrating timings of gate signals and source signals in the normal drive mode.

As illustrated in Fig. 5, in the normal drive mode, all of the gate bus lines Gn through Gn+i are sequentially selected. That is, in a frame (k-th frame), gate signals are sequentially supplied to the gate bus lines Gn through Gn+i so that a single gate signal is supplied every horizontal period.

Meanwhile, the source bus line Sm receives, for example, a source signal whose polarity is inverted every two horizontal periods in synchronization with rising of a gate signal and falling of a gate signal which occurs two horizontal periods after the rising of the gate signal. The polarity of the source signal is inverted every frame so that a signal potential whose polarity is reverse to that of the previous frame (k-th frame) is written into each subpixel in a next frame ((k+1)th frame).

This allows a source signal to be supplied to a subpixel for which driving is desired out of the subpixels R, G, B, and W, thereby allowing a desired image to be displayed in full color with the use of all of the four colors (R, G, B, and W).

Fig. 5 is described here in more detail. Fig. 5 illustrates timings between the common electric potential Vcom and the gate signal and the source signal in a case where a normally white display device carries out monochromatic display in the normal drive mode by performing line inversion driving in which a polarity is inverted every two horizontal lines. Note that common inversion driving is carried out in which a polarity of the common electric potential Vcom applied to the common electrode COM is inverted every two horizontal periods as with the source signal.

For example, in two selection periods in which gate signals are supplied to the gate bus line Gn and the gate bus line Gn+1, an electric potential of a source signal supplied to the source bus line Sm is a high electric potential for the subpixel R of an initial horizontal line and is a low electric potential for the subpixel W of a next horizontal line. Meanwhile, the common electric potential Vcom is high not only for the initial horizontal line but also for the next horizontal line.

A voltage applied to liquid crystals for each pixel (hereinafter referred to as a liquid crystal applied voltage) is a potential difference between an electric potential of a source signal and the common electric potential Vcom. Accordingly, a liquid crystal applied voltage for the subpixel R is a low voltage of a negative polarity, and a liquid crystal applied voltage for the subpixel W is a high voltage of a negative polarity.

Further, in the two selection periods, an electric potential of a source signal supplied to the source bus line Sm+1 is high for the subpixel G of the initial horizontal line as with the subpixel R, and is high also for the subpixel B of the next horizontal line. Accordingly, a liquid crystal applied voltage for the subpixel G is a low voltage of a negative polarity, and a liquid crystal applied voltage for the subpixel B is also a low voltage of a negative polarity.

Since a normally white display device is being discussed now, the subpixels R, G, and B each of which has an electric potential close to the common electric potential Vcom display almost white due to mixture of colors, and the subpixel W of a high electric potential displays black. That is, the subpixel W, which serves as the specific color subpixel, creates main information such as characters, and the other subpixels R, G, and B create a background color. Note that the display device may be a normally black display device as described later.

(Embodiment 1-1 of Low-Power Drive Mode)

Fig. 1 is a timing chart illustrating an example of timings of gate signals and source signals in the low-power drive mode of the present invention.

As illustrated in Fig. 1, in the low-power drive mode, the gate driver 3 scans the horizontal lines in each of which subpixels are aligned in the row direction so that (i) horizontal lines each including a specific color subpixel are selected and (ii) horizontal lines each including no specific color subpixel are non-selected, the specific color subpixel being a subpixel of a specific color for which driving is desired out of the subpixels R, G, B, and W. That is, the gate driver 3 drives the gate bus lines Gn so that a non-selection period in which no horizontal line is selected is provided in 1 vertical period.

For example, the subpixel W out of the subpixels R, G, B, and W that constitute the pixel 1 illustrated in Fig. 2 is set as the specific color subpixel. Accordingly, horizontal lines each including the subpixel W, i.e., horizontal lines in each of which the subpixel W and the subpixel B are aligned in the row direction are selected, whereas horizontal lines each including no subpixel W, i.e., horizontal lines in each of which the subpixel R and the subpixel G are aligned in the row direction are not selected.

With the arrangement, as illustrated in Fig. 1, even-numbered gate bus lines (e.g., the gate bus lines Gn+1, Gn+3, Gn+5, etc.) that correspond to the horizontal lines each including the subpixel W are sequentially driven, whereas odd-numbered gate bus lines (e.g., the gate bus lines Gn, Gn+2, Gn+4, etc.) that correspond to the horizontal lines each including no subpixel W are skipped without being driven.

Note that the present invention is not limited to an arrangement in which the gate bus lines corresponding to the horizontal lines each including the subpixel W are sequentially selected. Further, the present invention is not limited to the line driving method in which a polarity of the common electric potential Vcom is inverted, and is applicable also to source line inversion driving and dot inversion driving in each of which the common electric potential Vcom is fixed to a direct current voltage.

In the low-power drive mode, an image showing information in two colors can be displayed. One of the two colors serves as a background color, and is a color created by three colors, two of which are colors of subpixels aligned in a non-selected horizontal line and one of which is a color of one of subpixels aligned in a selected horizontal line. The other one of the two colors is a color obtained in a case where for example a high voltage is applied to the other one of the subpixels aligned in the selected horizontal line, i.e., the specific color subpixel.

For example, this can be explained in accordance with Fig. 1 as follows. In the non-selection period in which the gate bus line Gn is skipped, no voltage is applied to the subpixels R and G that are aligned in an initial horizontal line. Since a normally white display device is being discussed now, the subpixels R and G maintain their initial states, i.e., display white. To be precise, the subpixels R and G display red of high gradation and green of high gradation, respectively.

The non-selection period is followed by a selection period in which a gate signal is supplied to the gate bus line Gn+1 so that the subpixels W and B in a next horizontal line are selected. In this selection period, as for the subpixel W, the common electric potential Vcom is high, whereas an electric potential of a source signal supplied to the source bus line Sm is low. Accordingly, a liquid crystal applied voltage for the subpixel W is a high voltage of a negative polarity. As for the subpixel B, the common electric potential Vcom is high, whereas an electric potential of a source signal supplied to the source bus line Sm+1 is high. Accordingly, a liquid crystal applied voltage for the subpixel B is a low voltage of a negative polarity.

As a result, the subpixels R and G display white since no voltage is applied to the subpixels R and G that are in an initial state, and the subpixel B displays white (blue of high gradation, to be precise) since the subpixel B is charged so that a potential difference from the common electric potential Vcom is almost eliminated. Meanwhile, the subpixel W displays black since the subpixel W is charged so that a potential difference from the common electric potential Vcom is increased. Note that the subpixels R, G, and B display white as a result of mixture of the colors of high gradation.

Although it may be unnecessary to repeat the same explanation, the following describes next non-selection and selection periods. In a non-selection period (corresponding to the gate bus line Gn+2) in which the subpixels R and G aligned in a next horizontal line are skipped, no voltage is applied to the subpixels R and G. In a selection period in which a gate signal is supplied to the gate bus line Gn+3 so that the subpixels W and B in a next horizontal line are selected, a liquid crystal applied voltage for the subpixel W, which is determined by a source signal supplied to the source bus line Sm and the common electric potential Vcom, is a high voltage of a positive polarity, whereas a liquid crystal applied voltage for the subpixel B, which is determined by a source signal supplied to the source bus line Sm+1 and the common electric potential Vcom is a low voltage of a positive polarity.

Meanwhile, for example in a case of a normally black mode liquid crystal display device having the pixel configuration illustrated in Fig. 2, the background color becomes black since the subpixels R, G, and B display black in a case where a charging electric potential into liquid crystals is a low level. Meanwhile, the subpixel W displays white in a case where a charging electric potential into liquid crystals is high level. Consequently, in the normally black mode liquid crystal display device, white characters, image, etc. can be displayed on a black background.

As has been described, the low-power drive mode of the present invention is suitable for display of information that can be displayed in monochrome (e.g., a case where a user reads a text such as a book in a state in which power consumption is suppressed).

With the above arrangement, 1 frame (1 vertical period) includes a period (selection period) in which the gate driver 3 outputs a gate signal of a high level and a period (non-selection period) in which the gate driver 3 does not output a gate signal of a high level.

It is therefore possible to achieve a low-power drive mode in which power consumption is lowered due to the non-selection period, as compared with the normal display mode in which the gate driver 3 sequentially drives all of the gate bus lines Gn through Gn+i.

The above example has dealt with monochrome display in which (i) the background color is white and the main information is black or (ii) the background color is black and the main information is white. Note, however, that it is also possible that a user designate a favorite combination of colors as the background color and the color of the main information.

For example, in a case where (i) the subpixel B is set as the specific color subpixel, (ii) a charging electric potential for the subpixel B is set to a high level, and (iii) charging electric potentials for the remaining subpixels R, G, and W are set to a low level, main information can be displayed in blue on a light yellow background in the case of a normally white mode.

(Embodiment 1-2 of Low-Power Drive Mode)

In the low-power drive mode, the source driver 4 may completely stop an output of the source signal or output the source signal in a state in which a driving capability is reduced, in a period in which a horizontal line including no specific color subpixel is non-selected.

For example, in each of the periods in which the horizontal lines each including no subpixel W are non-selected, i.e., in each of the horizontal periods in which odd-numbered gate bus lines such as the gate bus lines Gn, Gn+2, and Gn+4 are skipped, the source driver 4 may stop an output of the source signal to all of the source bus lines Sm through Sm+j or output the source signal in a state in which a driving capability is reduced.

This produces an effect of reducing power consumption of the source driver 4 in addition to the effect of reducing power consumption of the gate driver 3. As a result, a large reduction in power consumption can be achieved in the display device as a whole.

Note that in an arrangement in which, in the low-power drive mode, an output of a source signal (e.g., Sm+1, Sm+3, etc.) to a column including no W pixel (column in which the subpixels G and B are aligned) is stopped in all of the periods, the following problem occurs, and therefore such an arrangement is not employed. For example, in a case where the line Gn+1 is being scanned, i.e., in a case where the row of the subpixel W and the subpixel B is being selected, the switching element of the subpixel B is being ON. Accordingly, if, for example, an output of the source bus line Sm+1 connected to the subpixel B is turned off, an indefinite voltage is applied to the subpixel B. As a result, the subpixel B displays unintended (indefinite) gradation.

(Embodiment 1-3 of Low-Power Drive Mode)

In the low-power drive mode, the gate driver 3 and the source driver 4 may operate as follows.

First, the gate driver 3 sequentially selects the horizontal lines each including the specific color subpixel (W) while skipping the horizontal lines each including no specific color subpixel.

In addition, the source driver 4 carries out the following operations (1) and (2). (1) In a case where a non-selection period in which a horizontal line including no specific color subpixel is not selected is provided immediately before a horizontal period in which a horizontal line including the specific color subpixel is selected, the source driver 4 starts, from the non-selection period, supply of the source signal to columns each including at least the specific color subpixel. (2) The source driver 4 reduces an output capability of a source signal output circuit for supplying the source signal to the subpixels.

The operations (1) and (2) are described below in more detail. As for the operation (1), for example, a horizontal period in which the gate bus line Gn is not driven is provided immediately before a horizontal period in which the gate bus line Gn+1 for selecting the specific color subpixel (W) is driven (see Fig. 6). Accordingly, supply of a source signal to at least the source bus lines Sm, Sm+2, Sm+4, etc. is started from the horizontal period in which the gate bus line Gn is not driven. Consequently, for example, polarity inversion of the source signal of the source bus line Sm starts from a horizontal period immediately before the horizontal period in which the gate bus line Gn+1 is driven.

The operations (1) and (2) are preferably performed not only for the columns each including the specific color subpixel but also for columns each including no specific color subpixel since the effect of reducing power consumption becomes larger. Note, however, that whether the operations (1) and (2) are carried out also for the columns each including no specific color subpixel is appropriately determined.

As for the operation (2), a specific example of the source signal output circuit is an operational amplifier 4a provided in the source driver 4, as described later with reference to Fig. 27. That is, an output capability (buffer capability) of the operational amplifier 4a is reduced. As a result, the polarity inversion of the source signal becomes more gradual as compared with a case where the output capability of the operational amplifier 4a is not reduced.

Note that the reduction in output capability of the operational amplifier 4a is achieved, for example, by reducing an amount of bias electric current to be applied to the operational amplifier 4a.

As a result of the operations (1) and (2), a polarity of a source signal supplied to each source bus line Sm+i corresponding to a column including at least the specific color subpixel (W) is inverted every two horizontal periods, as illustrated in Fig. 6.

In the waveform of Fig. 6, the AC driving of inverting polarity every predetermined number of horizontal periods which number corresponds to the number of rows of subpixels constituting each pixel is carried out 1 horizontal period earlier than the waveform of Fig. 1 in which start of supply of a source signal is not accelerated. Further, in the waveform of Fig. 6, rising or falling of a source signal is more gradual as compared with the waveform of Fig. 1.

In Fig. 6, frame inversion driving is further adopted as a method for driving the source signal. Note, however, that the present embodiment 1-3 is not limited to this driving.

In a case where the output capability of the source signal output circuit is reduced by the aforementioned operations, power consumption of the source driver 4 can be reduced as compared with the case of Embodiment 1-1.

Since the gate driver 3 carries out interlace scan, there always exists a case where a non-selection period in which a horizontal line including no specific color subpixel is not selected is provided immediately before a horizontal period in which a horizontal line including the specific color subpixel is selected.

Since the source driver 4 starts supply of a source signal from this non-selection period, the specific color subpixel (W) can be sufficiently charged even in a case where the output capability of the source signal output circuit is reduced.

(Embodiment 1-4 of Low-Power Drive Mode)

In the low-power drive mode of Embodiment 1-3, the common electrode driving circuit 7 may carry out common inversion driving in synchronization with timings of the AC driving and an output capability of the common output circuit which outputs the common electric potential Vcom may be reduced (see the waveform of the common electric potential Vcom in Fig. 6). Note that timings of polarity inversion of the common inversion driving need not necessarily be in sync with those of the AC driving of the source signal, provided that the timings are, for example, ones which allow the specific color subpixel (W) to be sufficiently charged.

Since the output capability of the common output circuit is reduced, it is possible to reduce power consumption of the common driver, thereby contributing to a reduction in power consumption of the display device. This reduction in output capability of the common output circuit combined with the reduction in output capability of the source signal output circuit allows a greater reduction in power consumption of the whole display device.

(Embodiment 1-5 of Low-Power Drive Mode)

The present embodiment 1-5 is a modification of Embodiment 1-3 described above. As illustrated in Fig. 7, in the present embodiment 1-5, the operations of the gate driver 3 and the source driver 4 are modified as follows.

First, the gate driver 3 sequentially selects the horizontal lines each including the specific color subpixel (W) while skipping the horizontal lines each including no specific color subpixel (W).

In addition, the source driver 4 carries out the aforementioned operation (1) and carries out the following operation (2') instead of the aforementioned operation (2). (1) In a case where a non-selection period in which a horizontal line including no specific color subpixel is not selected is provided immediately before a horizontal period in which a horizontal line including the specific color subpixel is selected, the source driver 4 starts, from the non-selection period, supply of the source signal to columns each including at least the specific color subpixel. (2') After an electric potential of the source signal reaches a predetermined level, the source driver 4 reduces an output capability of a source signal output circuit for supplying the source signal to the subpixels or stops an output of the source signal output circuit.

In Fig. 7, charging of a source bus line is started 1 horizontal period before the selection period. Note, however, that a timing of start of the charging is not limited, provided that the charging starts within a non-selection period immediately before the selection period.

Also in the present embodiment, power consumption of both of the gate driver 3 and the source driver 4 can be greatly reduced. Moreover, since the source driver 4 reduces the output capability of the source signal output circuit or stops an output of the source signal output circuit after the electric potential of the source signal reaches the predetermined level, it is possible to reduce a risk of insufficient pixel charging while reducing power consumption.

(Embodiment 1-6 of Low-Power Drive Mode)

In the low-power drive mode of Embodiment 1-5 described above, a timing at which the output capability of the source signal output circuit is reduced or the output of the source signal output circuit is stopped may be set as follows.

Fig. 8 is a waveform diagram illustrating in close-up a waveform included in the region A of the timing chart of Fig. 7.

As illustrated in Fig. 8, the timing at which the output capability of the source signal output circuit is reduced or the output of the source signal output circuit is stopped may be after elapse of a predetermined period of time t, which is shorter than 1 horizontal period, from rising of a gate signal for selecting a horizontal line including the specific color subpixel (W).

Accordingly, the output of the source signal output circuit is reduced or stopped during a period of time from rising of the gate signal to falling of the gate signal. This allows the electric potential of the source signal to more surely reach the desired level, thereby further reducing the risk of insufficient subpixel charging.

(Embodiment 1-7 of Low-Power Drive Mode)

The present embodiment 1-7 deals with another operation of the source driver 4 that can be combined with the low-power drive mode of Embodiment 1-1 described above. The following describes such another exemplary operation of the source driver 4 with reference to Fig. 9.

In the present embodiment 1-7, the following operations are carried out as basic operations. Specifically, the gate driver 3 sequentially selects the horizontal lines each including the specific color subpixel (W) while skipping the horizontal lines each including no specific color subpixel (W), and the source driver 4 carries out line inversion driving of inverting a polarity of the source signal every predetermined number of horizontal periods (e.g., predetermined number of horizontal periods which number corresponds to the number of rows of subpixels constituting each pixel). In addition to these basic operations, the source driver 4 connects an even number of source bus lines that are different in charging electric potential out of an even number of source bus lines to which the source signal is supplied, during a non-selection period in which a horizontal line including no specific color subpixel is non-selected. The even number of the source bus lines is not less than 2.

More specifically, the source driver 4 inverts the polarity of the source signal, for example, every two horizontal periods which correspond to two rows of the two rows and two columns of subpixels, as illustrated in (a) of Fig. 9.

In addition, the source driver 4 connects a pair of adjacent source bus lines that are different in charging electric potential during a period in which the gate bus line (e.g., Gn) for the horizontal lines each including no specific color subpixel (W) is non-selected (e.g., connects (i) the source bus line Sm having a lower electric potential thano the common electric potential Vcom and (ii) the source bus line Sm+1 having a higher electric potential with respect to than the common electric potential Vcom in the non-selection period (Gn)).

Further, the source driver 4 connects a next pair of adjacent source bus lines that are different in charging electric potential (e.g., connects (i) the source bus line Sum+2 having a low electric potential with respect to the common electric potential Vcom and (ii) the source bus line Sm+3 having a high electric potential with respect to the common electric potential Vcom in the non-selection period (Gn)). In this way, the source driver 4 sequentially connects subsequent pairs of source bus lines.

Note that the number of source bus lines to be connected at one time is not limited to two. In a case where the number of source bus lines is an even number (Q), all of the source bus lines may become targets of connection. Specifically, the source driver 4 may connect (i) an even number of (Q/2) source bus lines each of which becomes a high electric potential in a horizontal period and (ii) an even number of (Q/2) source bus lines each of which becomes a low electric potential in the horizontal period. That is, the number of source bus lines to be connected is not limited, provided that the number of source bus lines to be connected is an even number which is equal to or smaller than Q and which keeps balance between source bus lines charged to a high electric potential and source bus lines charged to a low electric potential.

Meanwhile, in a selection period in which a gate bus line (e.g., Gn+1) corresponding to a horizontal line including the specific color subpixel (W) is selected, the connection between the source bus lines is stopped, and all of the source bus lines are driven.

Since the source driver 4 drives the source bus lines while controlling a polarity of a source signal as described above, adjacent two source bus lines are charged to different electric potentials in a selection period for charging the subpixels W and B, as illustrated in (b) of Fig. 9. Accordingly, in a case where an even number (not less than 2) of source bus lines that are different in electric potential are connected and short-circuited, a high electric potential and a low electric potential balance out. This causes electric potentials of the source bus lines to be charged or discharged to an intermediate electric potential between the high electric potential and the low electric potential in a non-selection period (see (a) of Fig. 9).

Then, in the selection period, the electric potentials of the source bus lines are charged again to desired electric potentials by an output from the source driver 4.

Note that a period in which the source bus lines are connected with each other may be part of the non-selection period instead of the whole non-selection period.

The above arrangement substantially reduces a load on the source driver 4. This, combined with a reduction in power consumption of the gate driver 3, allows a further reduction in power consumption.

(Embodiment 1-8 of Low-Power Drive Mode)

The present embodiment 1-8 deals with a modification that can be applied to the operation of the gate driver 3 in the low-power drive mode of each of Embodiments 1-1 through 1-7 described above and to the operation of the gate driver 3 in Embodiment 3-1-B described later. The following describes an operation of the gate driver 3 with reference to Fig. 10.

In the present embodiment 1-8, the gate driver 3 prolongs an ON period of the gate signal for selecting the horizontal line including the specific color subpixel (W) so that the ON period overlaps at least a horizontal period for a non-selected horizontal line which horizontal period is immediately before a horizontal period for the horizontal line including the specific color subpixel, out of (i) the horizontal period for the non-selected horizontal line which horizontal period is immediately before the horizontal period for the horizontal line including the specific color subpixel and (ii) a horizontal period for a non-selected horizontal line which horizontal period is immediately after the horizontal period for the horizontal line including the specific color subpixel.

More specifically, each of the selection periods of the gate bus lines Gn+1, Gn+3, Gn+5, etc. that correspond to the horizontal lines each including the specific color subpixel (W) is prolonged from a normal length, i.e., 1 horizontal period to 2 horizontal periods for example, as illustrated in Fig. 10.

Each of the selection periods is prolonged as follows. For example, a normal selection period in which the gate bus line Gn+1 is selected is prolonged by adding thereto a horizontal period immediately before the selection period. In the full-color display mode (Fig. 5), there is a selection period in which the gate bus line Gn adjacent to the gate bus line Gn+1 is selected 1 horizontal period earlier than the gate bus line Gn+1. This selection period is replaced by a non-selection period in the low-power drive mode. Accordingly, the selection period of the present embodiment 1-8 overlaps this non-selection period.

Note that a selection period for a gate bus line may overlap a non-selection period that is 1 horizontal period after the selection period, provided that the selection period does not overlap previous and subsequent selection periods for gate bus lines.

Note that in a case where a selection period for a gate bus line overlaps a non-selection period that is 1 horizontal period after the selection period, it is necessary to delay an inversion timing of the common electric potential Vcom. This is because display is affected unless the inversion timing of the common electric potential Vcom is set within an OFF period of the gate signal.

This allows a charging period for the subpixels to be long, thereby producing an effect that an output capability of the source signal output circuit of the source driver 4 can be reduced.

Further, in a case where the operation of the gate driver 3 of the present embodiment 1-8 is combined with the operation of the source driver 4 of Embodiment 1-7 described above, an effect of charging or discharging between voltages applied to subpixels corresponding to connected source bus lines is produced in addition to the effect of charging or discharging between the connected source bus lines.

As a result, the load of the source driver 4 can be further reduced. This allows a further reduction in power consumption.

(Supplement concerning External Driving Circuit)

The external driving circuit 6 supply the drive mode control signal and the polarity inversion control signal. In addition, the external driving circuit 6 supplies, to the gate driver 3, a gate clock signal GCK and a gate start pulse GSP and supply, to the source driver 4, a source clock signal SCK, a source start pulse SSP, and display data DA.

(Supplement concerning Source Driver)

Source switches SWj each serving as a switch are provided between data signal output terminals of the source driver 4 and the source bus lines Sm+j. The following deals with an example in which a single source switch SWj is provided between a single data signal output terminal and a single source bus line Sm+j.

As illustrated in Fig. 27, the source switch SW is, for example, a TFT, and is connected between an output of the operational amplifier 4a of the source driver 4 and the source bus line Sm. The source switch SW is turned on/off in accordance with a control signal s0 supplied from the external driving circuit 6. In this case, the source switch SW is typically built monolithically onto a display panel. In this case, the source driver 4 is typically produced as an IC, but alternatively the source driver 4 may be monolithically built on the display panel. Such arrangements are suitable, for example, for a panel using polycrystalline silicon, CG silicon, microcrystalline silicon, or the like.

The source switch SW may be provided inside the source driver 4 produced as an IC or may be provided outside the display panel. Such an arrangement is suitable, for example, for a panel using amorphous silicon. The source switch SW is not limited to a TFT, and can be a switch of any form such as a general field-effect transistor or a bipolar transistor.

(Supplement concerning Gate Driver)

Next, the following describes details of a configuration of the gate driver 3 used in the embodiments described above. Fig. 28 is a block diagram illustrating an exemplary configuration of the gate driver 3. As illustrated in Fig. 28, the gate driver 3 includes a plurality of gate driver ICs 411 through 41q. Fig. 29 illustrates an exemplary configuration of a gate driver IC 41n.

The gate driver IC 41 n includes first and second shift registers 42 and 43, first and second AND gates 441 and 442, and an output section 45. The first shift register 42 is a shift register for odd-numbered stages, and the second shift register 43 is a shift register for even-numbered stages. The first AND gates 441 are provided corresponding to outputs from the first shift register 42, and the second AND gates 442 are provided corresponding to outputs from the second shift register 43. The output section 45 outputs scanning signals G1 to Gp on the basis of output signals g1 to gp of the first AND gates 441 and the second AND gates 442.

The gate driver IC 41n receives gate start pulses GSPa and GSPb, gate clock signals GCKa and GCKb, and gate output control signals GOEa and GOEb which are supplied from the external driving circuit 6 to the shift registers. The gate start pulses GSPa and GSPb are supplied to an input end of the first shift register 42 and an input end of the second shift register 43, respectively, and start pulse signals SPoa and SPob to be supplied to a subsequent gate driver IC are supplied from an output end of the first shift register 42 and an output end of the second shift register 43, respectively.

Each of the first AND gates 441 receives an odd-numbered stage output signal Qk (k is an odd number) supplied from the first shift register 42 and a logic inversion signal of the gate output control signal GOEa. Meanwhile, each of the second AND gates 442 receives an even-numbered stage output signal Qk (k is an even number) supplied from the second shift register 43 and a logic inversion signal of the gate output control signal GOEb.

The gate driver 3 according to this exemplary configuration is obtained by connecting in cascade the plurality of (q) gate driver ICs 411 through 41q each having the above configuration.

The following describes an operation of the gate driver 3 according to this exemplary configuration.

The external driving circuit 6 (i) generates, on the basis of a vertical sync signal supplied to the display device, the gate start pulse signals GSP (GSPa and GSPb) each of which becomes an H level for only a predetermined period every 1 frame period (I vertical scanning period) and (ii) generates, on the basis of a horizontal sync siganl supplied to the display device, the gate clock signals GCK (GCKa and GCKb) and the gate driver output control signals GOE (GOEa and GOEb).

In the full-color display mode, the gate start pulse signals GSP (GSPa and GSPb), the gate clock signals GCK (GCKa and GCKb), and the gate driver output control signal GOE (GOEa and GOEb) thus generated are supplied to the gate driver 3.

Meanwhile, in the low-power drive mode, the gate start pulse signal GSPa, the gate clock signal GCKa, and the gate driver output control signal GOEa out of the signals thus generated are supplied to the gate driver 3. GSPb, GCKb, and GOEb are inputted at a fixed level (High level or Low level).

When such gate start pulses GSP and gate clock signals GCK (GCKa and GCKb) are supplied to the gate driver 3, output signals Q1 and Q2 of initial stages of the first and second shift registers 42 and 43 of the top gate driver IC 411 are outputted. The output signals Q1 and Q2 each includes a pulse which corresponds to a pixel data write-in pulse in each frame period.

Such pulses are sequentially transferred to stages of the first and second shift registers 42 and 43 in accordance with the gate clock signal GCK. Then, output signals Qn each having a signal waveform which becomes an H level in sync with rising of GCK and becomes an L level in sync with next rising of GCK are sequentially supplied from the stages of the first and second shift registers 42 and 43 at different timings from each other.

Further, the external driving circuit 6 generates the gate output control signals GOE (GOEa and GOEb) to be supplied to the gate driver ICs 411 1 through 41q constituting the gate driver 3, as described above. The gate output control signals GOE to be supplied to the n-th gate driver IC 41n become an L level or an H level for adjustment of a pixel data write-in pulse width in a period in which a pulse corresponding to the pixel data write-in pulse is outputted from any of the stages of the first and second shift registers 42 and 43 of the gate driver IC 41n. This corresponds to the state in which a pulse becomes an level for the predetermined period, and the pulse which becomes an H level for the predetermined period is referred to as "write-in period adjustment pulse".

The pulse (write-in period adjustment pulse) included in the gate output control signal GOE for adjustment of the pixel data write-in pulse can be appropriately adjusted depending on a period in which output of a necessary pixel data write-in pulse is desired.

In each of the gate driver IC chips 41n (n = 1 to q), the first and second AND gates 441 and 442 generate internal scanning signals g1 to gp on the basis of (i) the output signals Qk (k = 1 to p) from the stages of the shift registers, (ii) the gate clock signals GCK, and (iii) the gate output control signals GOE. These internal scanning signals g1 to gp are level-converted in the output section 45, and thus the scanning signals G1 to Gp to be supplied to the gate bus lines Gn to Gn+i are outputted.

[Embodiment 2]

Another embodiment of the present invention is described below with reference to the drawings. For convenience of description, members that have identical functions to those illustrated in the drawings of the Embodiment above are given identical reference numerals, and are not explained repeatedly.

In the low-power drive mode of the embodiment described above, interlace scan in which a selection period and a non-selection period are alternately provided is carried out (see (b) of Fig. 11). Meanwhile, in the low-power drive mode of the present embodiment, power consumption is reduced without carrying out such interlace scan.

(Embodiment 2-1 of Low-Power Drive Mode)

In the present embodiment 2-1, the gate driver 3 selects 1 horizontal line every horizontal period so as to successively select all of the horizontal lines each including the specific color subpixel (W) in 1 frame, and does not select all of the horizontal lines each including no specific color subpixel (see (c) of Fig. 11).

More specifically, out of gate bus lines G0 to Gm illustrated in (a) of Fig. 11, the even-numbered gate bus lines (G1, G3, etc.) corresponds to the horizontal lines each including the specific color subpixel (W) and the odd-numbered gate bus lines (G0, G2, etc.) corresponds to the horizontal lines each including no specific color subpixel, as described in the explanation of the pixel configuration with reference to Fig. 2.

In the normal display mode, the gate driver 3 sequentially drives all of the gate bus lines G0 through Gm (see (a) of Fig. 11). After shift from the normal display mode to the low-power drive mode, the gate driver 3 successively drives the even-numbered gate bus lines (G1, G3, etc.) so that a single gate bus line is driven in each horizontal period, and stops its operation after driving The last gate bus line Gm out of the even-numbered gate bus lines.

As a result, a resting period t1 (non-selection period) expressed by the following equation occurs in the latter half of 1 frame:

$$\tau 1 = 1\,H \times (m+1) / 2$$

where 1H represents 1 horizontal period and m+1 represents the total number of gate bus lines (even number). Since the resting period t1 which accounts for about half of 1 frame is provided every frame, it is possible to achieve a low-power drive mode in which power consumption is lower due to the resting period t1 as compared with the full-color display mode.

Note that the common electric potential Vcom is inverted between a high electric potential and a low electric potential every horizontal period in sync with the successive driving of the even-numbered gate bus lines (G1, G3, etc.) carried out so that a single gate bus line is driven every horizontal period. As for a source bus line Sn corresponding to a column including the specific color subpixel (W), a liquid crystal applied voltage which is determined by a source signal and the common electric potential Vcom becomes a high voltage of a negative polarity with respect to the common electric potential Vcom in a selection period for the gate bus line G1, and becomes a high voltage of a positive polarity with respect to the common electric potential Vcom in a selection period for the gate bus line G3. In this way, polarity inversion is repeatedly carried out every horizontal period.

As for a source bus line Sn+1 corresponding to a column including no specific color subpixel (W), the liquid crystal applied voltage becomes a low voltage of a negative polarity with respect to the common electric potential Vcom in the selection period for the gate bus line G1, and becomes a low voltage of a positive polarity with respect to the common electric potential Vcom in the selection period for the gate bus line G3. In this way, polarity inversion is repeatedly carried out every horizontal period. The polarity of the source bus line Sn+1 becomes identical to that of the source bus line Sn.

Accordingly, in the case of a normally white display device, liquid crystals of the subpixel B are charged to a low voltage, for example, by the source bus line Sn+1 so as to display white (blue of a high gradation), the subpixels R and G are not charged at all and maintain their initial states, i.e., display white (red of a high gradation and green of a high gradation), and liquid crystals of the subpixel W are charged to a high voltage, for example, by the source bus line Sn so as to display black. As a result, in a low power consumption mode, good monochrome display in which a background color is white and a color of main information is black is achieved.

Note that the monochrome display can be maintained in the resting period t1 since the subpixels maintain an immediately preceding charging state in the resting period t1.

(Embodiment 2-2 of Low-Power Drive Mode)

Regarding Embodiment 2-1 described above, in 1 frame, the source driver 4 may entirely stop output of the source signal or may reduce an output capability during the non-selection period (the resting period t1) in which both of the horizontal lines each including the specific color subpixel and the horizontal lines each including no specific color subpixel are not selected. That is, supply of a write-in voltage from the operational amplifier 4a provided in the source driver 4 to the source bus lines Sm may be stopped or a capability for supplying the write-in voltage may be reduced.

This produces an effect of reducing power consumption of the source driver 4 in addition to the effect of reducing power consumption of the gate driver 3. As a result, a great reduction in power consumption of the whole display device can be attained.

[Embodiment 3]

Still another embodiment of the present invention is described below with reference to the drawings. For convenience of description, members that have identical functions to those illustrated in the drawings of the embodiments above are given identical reference numerals, and are not explained repeatedly.

In the low-power drive mode of the present embodiment, the following basic operation is carried out for the purpose of improving display quality. Specifically, (i) a frame in which all of the gate bus lines are driven is inserted between frames in which the low-power drive mode described in each of Embodiments 1 and 2 is executed or (ii) a plurality of frames are inserted between the frames so that (a) all of the gate bus lines are distributed into the plurality of frames and (b) all of the gate bus lines are selected in a stepwise manner throughout these frames.

(Embodiment 3-1-A of Low-Power Drive Mode)

In the present embodiment 3-1-A, a frame in which all of the horizontal lines are selected regardless of presence or absence of the specific color subpixel (W) is periodically or non-periodically inserted between the frames in which the low-power drive mode described in each of Embodiments 1 and 2 is executed, as illustrated in Fig. 12.

In the frame in which all of the horizontal lines are selected, for example, all of the gate bus lines are sequentially driven in the order from the top one toward the last one, as in the normal display mode. Note, however, that all of the gate bus lines need not necessarily be sequentially driven, provided that all of the gate bus lines are driven at least once in 1 frame.

Insertion of the frame in which all of the horizontal lines are selected is meaningful as a measure against a problem that reliability of liquid crystals declines in a case where a state in which no signal is written into the pixels continues.

This problem that reliability of liquid crystals declines can be avoided by selecting all of the horizontal lines once in several frames so that some sort of signal is written into the pixels.

(Embodiment 3-1-B of Low-Power Drive Mode)

In the present embodiment 3-1-B, as illustrated in Fig. 13, a plurality of frames are periodically or non-periodically inserted between the frames (a (k-1)th frame and a (k+j+1)th frame in Fig. 13) in which the low-power drive mode described in each of Embodiments 1 and 2 is executed. In each of the plurality of frames thus inserted, the horizontal lines each including the specific color subpixel (W) are sequentially selected and some of the horizontal lines each including no specific color subpixel are selected so that all of the horizontal lines each including no specific color subpixel are selected throughout the plurality of frames.

This makes it possible to avoid the problem that reliability of liquid crystals declines, as in Embodiment 3-1-A.

Note that the order in which some of the horizontal lines each including no specific color subpixel are selected in each of the plurality of frames is not limited in particular and that the number of horizontal lines selected in each of the plurality of frames need not to be same among the plurality of frames. Further, the number of frames to be inserted is not limited in particular.

(Embodiment 3-2 of Low-Power Drive Mode)

In the low-power drive mode of each of Embodiments 3-1-A and 3-1-B described above, the source driver 4 preferably supplies, to subpixels other than the specific color subpixel, (i) a source signal of a white voltage in the case of a normally white mode and (ii) a source signal of a black voltage in the case of a normally black mode in the frame inserted between the frames in which the low-power drive mode is executed.

More specifically, in a case where the display driving method illustrated in Fig. 12 or 13 is applied to the pixel configuration illustrated in Fig. 2, at the time of driving of the gate bus line Gn, the source signal of a white voltage or a black voltage is supplied to the subpixels R and G corresponding to the gate bus line Gn in the k-th frame in which all of the horizontal lines are selected or in the (k+j)th frame in which some of the horizontal lines each including no specific color subpixel are selected. That is, the source signal of a white voltage or a black voltage is supplied to all of the source bus lines Sm to Sm+j.

At the time of driving of the next gate bus line Gn+1, the source signal of a white voltage or a black voltage is supplied to the subpixel B. That is, the source signal of a white voltage or a black voltage is supplied to each of the source bus lines (Sm+1, Sm+3, etc.) corresponding to the columns each including the subpixel B.

Fig. 14 shows a characteristic of transmittance T(%) with respect to an applied voltage V (V-T characteristic) in each of a normally white liquid crystal display panel and a normally black liquid crystal display panel. In the case of normally white mode, the transmittance becomes maximum when the liquid crystal applied voltage is low, and the transmittance becomes minimum when the liquid crystal applied voltage is high. A change ratio of the transmittance in a halftone is relatively large. The V-T characteristic of the normally black mode is reverse to that of the normally white mode.

In a case where the source bus lines are driven as above, it is possible to provide an image in which, for example, (i) a background is displayed in a color obtained in a case where a source signal is supplied to the subpixels (R, G, and B) of a plurality of colors other than the specific color subpixel so that the liquid crystal applied voltage becomes low in each of the normally white mode and the normally black mode and (ii) information is displayed in a different color obtained in a case where a source signal is supplied to the specific color subpixel (W) so that the liquid crystal applied voltage becomes high.

More specifically, in the case of the normally white mode, a white voltage is supplied to the subpixel R, G, and B. As a result, a background color becomes white. A voltage corresponding to information is written into the specific color subpixel W. Consequently, it is possible to achieve so-called monochrome image display in which gray or black characters or image is displayed on a white background.

Meanwhile, in the case of the normally black mode, a black voltage is supplied to the subpixel R, G, and B. As a result, the background color becomes black. A voltage corresponding to information is written into the specific color subpixel W. Consequently, gray or white characters or image can be displayed on a black background. That is, it is possible to display a negative image of the monochromatic image obtained in the case of the normally white mode.

By thus periodically or non-periodically rewriting (refreshing) the background color, it is possible to avoid problems such as a problem that a DC component remains in non-selected subpixels. It is therefore possible to maintain high display quality in the low-power drive mode.

(Embodiment 3-3 of Low-Power Drive Mode)

In a display device of the present embodiment 3-3, (i) the source driver 4 carries out AC driving of inverting a polarity of the source signal at least every frame and (ii) at least one frame in which all of the horizontal lines are selected is inserted after a successive even number of frames in which only the horizontal lines each including the specific color subpixel (W) are sequentially selected, as illustrated in Fig. 15.

More specifically, a (k+1)th frame through a (k+j-1)th frame are successively provided as the successive even number of frames in which only the gate bus lines (Gn+1, Gn+3, Gn+5, etc.) corresponding to the horizontal lines each including the specific color subpixel (W) are selected. In addition, in the (k+1)th frame through (k+j-1)th frame, a polarity of a source signal written into an identical subpixel is inverted every frame.

This allows a source signal of a positive polarity and a source signal of a negative polarity to be alternately written into the rows each including the specific color subpixel (W) in a well-balanced manner. As a result, in a case where the display device is a liquid crystal display device, no DC component is applied to liquid crystals, thereby preventing image sticking, i.e., occurrence of an afterimage. This can further improve the display quality attained by Embodiment 3-2 in which at least one frame in which all of the horizontal lines are selected is inserted between frames of the low-power drive mode.

(Embodiment 3-4 of Low-Power Drive Mode)

In the present embodiment 3-4, in the low-power drive mode described in any of Embodiment 3-1 through 3-3 described above, the source driver 4 causes a polarity of the source signal in the frame in which all of the horizontal lines are selected to be reverse to that in a next frame in which all of the horizontal lines are selected, as illustrated in Fig. 16.

More specifically, a polarity of a source signal written into a subpixel in a k-th frame in which all of the horizontal lines are selected is made reverse to a polarity of a source signal written into the subpixel in a next (k+j) th frame in which all of the horizontal lines are selected.

In the display driving method illustrated in Fig. 16, a polarity of a source signal is inverted every two horizontal periods, which correspond to the number of rows of subpixels constituting each pixel (e.g., two rows), as described in Embodiment 1 with reference to Fig. 4. Accordingly, for example, a polarity of a source signal is made positive in periods in which the gate bus lines Gn and Gn+1 are driven, whereas a polarity of a source signal is made negative in subsequent periods in which the gate bus lines Gn+2 and Gn+3 are driven. In the light of the gist of the present embodiment 3-4, line inversion drive is not limited to a specific one and can be any form of line inversion drive.

As a result, in a case where the display device is a liquid crystal display device, a DC component is more unlikely to be applied to liquid crystals, and therefore image sticking, i.e., occurrence of an afterimage is more unlikely to occur. It is therefore possible to further improve the display quality improved by the low-power drive mode described in each of Embodiments 3-1-A through 3-3 described above, by combining each of Embodiments 3-1-A through 3-3 with the present embodiment 3-4.

(Embodiment 3-5 of Low-Power Drive Mode)

In the present embodiment 3-5, a successive even number of frames in which all of the horizontal lines are selected are provided, as illustrated in Fig. 17.

This allows source signals of different polarities to be written into a subpixel in the successive even number of frames in which all of the horizontal lines are selected. Moreover, writing of the source signals of different polarities into a subpixel can be carried out in a short period of time. Accordingly, in a case where the display device is a liquid crystal display device, a DC component is more unlikely to be applied to liquid crystals. As a result, image sticking, i.e., occurrence of an afterimage becomes more unlikely to occur.

It is therefore possible to further improve display quality improved by each of Embodiments 3-1-A through 3-4 described above, by replacing the frame in which all of the horizontal lines are selected in the low-power drive mode described in each of Embodiments 3-1-A through 3-4 with the successive even number of frames.

(Embodiment 3-6 of Low-Power Drive Mode)

The display driving method of the present embodiment 3-6 is a modification obtained by combining each of Embodiments 3-1-A through 3-4 with Embodiment 3-5, and has the following contents (1) through (3), as illustrated in Fig. 18. (1) A first period, a second period following the first period, and a third period following the second period are provided, (i) the first period including a successive even number of frames in each of which all of the horizontal lines are selected regardless of presence or absence of the specific color subpixel (W), (ii) the second period including at least one frame in which only the horizontal lines each including the specific color subpixel are sequentially selected, and (iii) the third period including a successive even number of frames in each of which all of the horizontal lines are selected. (2) The source driver 4 inverts, in the first period, a polarity of the source signal at least every frame. (3) The source driver 4 inverts, in the third period, the polarity of the source signal at least every frame in a manner reverse to that in the first period.

In a case where the first period and the third period are provided as above, writing of a source signal of a positive polarity and writing of a source signal of a negative polarity into all of the horizontal lines can be alternated not only in a short period of time but also in a long period of time.

As a result, in a case where the display device is a liquid crystal display device, a DC component is more unlikely to be applied to liquid crystals. As a result, image sticking, i.e., occurrence of an afterimage becomes more unlikely to occur. It is therefore possible to further improve the effects obtained by each of Embodiments 3-1-A through 3-5 described above.

[Embodiment 4]

Still another embodiment of the present invention is described below with reference to the drawings. For convenience of description, members that have identical functions to those illustrated in the drawings of the embodiments above are given identical reference numerals, and are not explained repeatedly.

The present embodiment deals with display driving methods each of which allows smooth shift from the normal display mode to the low-power drive mode. Accordingly, each of the display driving methods of Embodiment 4 can be combined with a display driving method for achieving each of the low-power drive modes of Embodiments 1 through 3.

(Embodiment 4-1 of Drive Mode Shift)

In the present embodiment 4-1, a frame for shift which corresponds to a display mode is inserted as follows at the time of shift from the normal drive mode (the full-color display mode) in which all of the horizontal lines are selected to the low-power drive mode in which only the horizontal lines each including the specific color subpixel (W) are selected, as illustrated in Fig. 19.

Case of normally white mode

At least one frame in which a white voltage is written into all of the subpixels constituting the display screen is inserted between a (n-1)th frame of the full-color display mode and a (n+1)th frame of the low-power drive mode. Fig. 19 illustrates a case of normally white mode.

Case of normally black mode

At least one frame in which a black voltage is written into all of the subpixels constituting the display screen is inserted between the (n-1)th frame of the full-color display mode and the (n+1)th frame of the low-power drive mode.

In a case where the drive mode is switched from the full-color display mode to the low-power drive mode, a drive mode control signal is supplied from the external driving circuit 6 (see Fig. 25) to the source driver 4 and the common electrode driving circuit 7, as illustrated in Fig. 19. In Fig. 19, in a case where the drive mode control signal is a low level, the full-color display mode is set, whereas in a case where the drive mode control signal is a high level, the low-power drive mode is set. Note, however, that a method for switching the drive mode is not limited in particular.

For example, a method of setting a register by a SPI (Serial Peripheral Interface) or an 12C (Inter-Integrated Circuit) may be employed.

Further, it is unnecessary to set a register from the external driving circuit 6 to both of the gate driver 3 and the source driver 4. For example, it is also possible that (i) only the register of the source driver 4 is set and (ii) the gate driver 3 may respond to a signal outputted by the source driver 4. The switching of the drive mode is similarly applied to Embodiments 4-2 and 4-3 described later.

According to the display driving method, in each of the normally white mode and the normally black mode, a liquid crystal applied voltage for all of the subpixels constituting the display screen is initialized to a low voltage at the time of shift from the full-color display mode to the low-power drive mode. This makes it possible to determine a background color. Further, even if a DC component which causes an afterimage remains in any of the subpixels, it is possible to eliminate the DC component. As a result, it is possible to maintain high display quality in the low-power drive mode.

(Embodiment 4-2 of Drive Mode Shift)

In the present embodiment 4-2, a plurality of frames for shift are inserted, and the source driver 4 inverts a polarity of the source signal at least every frame in the plurality of frames thus inserted, as illustrated in Fig. 20.

For example, in the case of the normally white mode, a n-th frame and a (n+1)th frame in each of which a white voltage is written into all of the subpixels constituting the display screen are inserted between a (n-1)th frame of the full-color display mode and a (n+2)th frame of the low-power drive mode, and a polarity of a white voltage applied to a subpixel in the n-th frame is made reverse to that of a white voltage applied to the subpixel in the (n+1)th frame.

In the display driving method illustrated in Fig. 20, a polarity of a source signal is inverted every two horizontal periods, which correspond to the number of rows of subpixels constituting each pixel (e.g., two rows), as described in Embodiment 1 with reference to Fig. 4.

Since the polarity of the source signal is inverted at least every frame in the plurality of frames thus inserted, it is possible to more surely eliminate the DC component.

(Embodiment 4-3 of Drive Mode Shift)

In the present embodiment 4-3, a plurality of frames in which the number of non-selected horizontal lines each including no specific color subpixel is gradually increased are inserted at the time of shift from the normal drive mode in which all of the horizontal lines are selected to the low-power drive mode in which only the horizontal lines each including the specific color subpixel (W) are selected, as illustrated in Fig. 21. In the plurality of frames thus inserted, monochrome display in which the specific color subpixel (w) displays white or black information and the subpixel R, G, and B other than the specific color subpixel display a black or white background color is carried out, as in the low-power drive modes described above.

For example, a n-th frame, a (n+1)th frame, and a (n+2)th frame in which the number of non-selected horizontal lines each including no specific color subpixel is gradually increased (two in the n-th frame, four in the (n+1)th frame, and six in the (n+2)th frame) are inserted between a (n-1)th frame of the full-color display mode and a (n+k)th frame in which shift to the low-power drive mode has been completed. In a (n+k-1)th frame that is finally inserted, the number of non-selected horizontal lines reaches (m+1)/2,

In a case where the drive mode is switched from the normal drive mode to the low-power drive mode in a frame subsequent to a frame of the normal drive mode, a change of display instantaneously occurs. Meanwhile, according to the display driving method in which a plurality of frames are inserted, a change of display at the time of mode shift becomes gradual since frames of an intermediate drive mode are inserted between a frame of the normal drive mode and a frame of the low-power drive mode. As a result, it is possible to provide a display device which does not give a user a sense of strangeness at the time of mode shift.

According to the configurations of the gate driver 3 illustrated in Figs. 28 and 29, in the full-color display mode, GOEa and GOEb are alternately brought into a low level so that a scanning signal is sequentially transferred from the first and second AND gates 441 and 442 to the output section 45, but in a shift period, GOEb is not brought into a low level, but is kept at a high level during a period corresponding to a row including no specific color subpixel which period is desired to be a non-scanning period.

Accordingly, even in a case where GSPb and GCKb are supplied to the gate driver 3 so that the first and second shift registers 42 and 43 operate in a similar manner to the full-color display mode, the scanning signal is not supplied to the output section. Consequently, the row including no specific color subpixel for which row scanning is not desired is not scanned.

After end of the shift period, i.e., in the low-power drive mode, it is possible to stop the operation of the second shift register 43 by fixing GSPb and GCKb supplied to the gate driver 3 a high level or a low level.

[Embodiment 5]

Still another embodiment of the present invention is described below with reference to the drawings. For convenience of description, members that have identical functions to those illustrated in the drawings of Embodiments described above are given identical reference numerals, and are not explained repeatedly.

The present embodiment describes a preferable example of a way in which the subpixels of respective colors that constitute each pixel are disposed.

(Embodiment 5-1 Concerning Way in Which Subpixels are Disposed)

In the present embodiment 5-1, in a case where each of the pixels is made up of two rows and two columns of subpixels, subpixels having colors of a relatively high absolute luminance ratio are diagonally disposed.

More specifically, in a case where each pixel is made up of two rows and two columns of subpixels R, G, B, and W having respective four colors, the subpixel G and the subpixel W that have a relatively high absolute luminance ratio are diagonally disposed, as illustrated in (a) and (b) of Fig. 22. Note that it is only necessary that the subpixels R and B that have a relatively low absolute luminance ratio be disposed diagonally and symmetrically to the subpixels G and W, and positions of the subpixels R and B may be interchanged with each other.

In the normal drive mode in which all of the horizontal lines are selected in all of the frames, in a case where subpixels having a high absolute luminance ratio are disposed in an identical horizontal line, a luminance difference between the horizontal line and the other horizontal line in which subpixels having a low absolute luminance ratio are disposed becomes large.

It is possible to prevent occurrence of such luminance difference in the normal drive mode by diagonally disposing subpixels of colors (e.g., white and green) having a relatively high absolute luminance ratio as described above. As a result, it is possible to provide a display device having improved display quality.

(Embodiment 5-2 Concerning Way in Which Subpixels are Disposed)

The present embodiment 5-2 describes an example of the way in which the subpixels are disposed so that a priority is placed on improvement of display quality in the low-power drive mode. Specifically, in a case where each of the pixels is made up of two rows and two columns of subpixels having respective colors, a plurality of subpixels aligned in a horizontal line including no specific color subpixel (W) are subpixels having colors of a relatively low absolute luminance ratio.

More specifically, in a case where each pixel is made up of two rows and two columns of subpixels R, G, B, and W having respective four colors, the subpixels R and B that have a relatively low absolute luminance ratio are disposed in the horizontal line including no subpixel W, as illustrated in (a) and (b) of Fig. 23. Note that positions of the subpixels R and B may be interchanged with each other.

In the low-power drive mode of the present invention, there is a case where no voltage is applied, over a plurality of frame periods, to subpixels aligned in a horizontal line including no specific color subpixel. It is therefore feared that a fluctuation of luminance occurs in the non-selected horizontal line due to leakage of an applied voltage.

Accordingly, in a case where subpixels of colors (e.g., red and blue) having a low absolute luminance are aligned in a horizontal line including no specific color subpixel, it is possible to prevent a decline in display quality in the low-power drive mode.

To cope with the problem described in Embodiment 5-1, i.e., the problem that a luminance difference between a horizontal line in which subpixels having a high absolute luminance ratio are disposed and a horizontal line in which subpixels having a low absolute luminance ratio are disposed becomes large in the normal drive mode, an electric potential of a source signal is controlled in consideration of occurrence of the luminance difference so that the luminance difference does not occur.

It is assumed here that the pixels are almost same in area ratio of the four subpixels R, G, B, and W. However, a the present invention is not limited to this.

[Embodiment 6]

Still another embodiment of the present invention is described below with reference to the drawings. For convenience of description, members that have identical functions to those illustrated in the drawings of Embodiments described above are given identical reference numerals, and are not explained repeatedly.

In the present embodiment, a region in which the horizontal lines each including no specific color subpixel (W) are non-selected and the horizontal lines each including the specific color subpixel are selected is part of the whole region of the display screen, as illustrated in Fig. 24.

Fig. 24 illustrates an example in which interlace scan is carried out only in the vicinity of a center of the display screen. Note, however, that a region in which the interlace scan is carried out is not limited to the vicinity of the center, and the interlace scan may be carried out only in an upper end region, only in a lower end region, or in a plurality of desired regions.

Even in a case where monochrome display is carried out only in part of the display screen as a content displayed on the display screen, it is possible to reduce power consumption by applying the low-power drive mode of the present invention to the part of the display screen.

Note that monochrome display may be carried out also in the "NORMAL DISPLAY AREA" illustrated in Fig. 24 while sequentially scanning all of the horizontal lines.

The following is supplementary description of the features of the display device of the present invention.

The display device of the present invention may be arranged such that the gate driver sequentially selects the horizontal lines each including the specific color subpixel while skipping the horizontal lines each including no specific color subpixel.

Accordingly, in a case where the selection period follows the non-selection period, it is possible to start supply of a source output signal to a source bus line from the non-selection period followed by the selection period, as described later. This, combined with source bus line driving (e.g., sufficiently charging the subpixels by prolonging a charging time for the subpixels while reducing a driving capability of the source driver), makes it possible to obtain a power reducing effect.

The display device of the present invention is arranged such that, during a period in which the horizontal lines each including no specific color subpixel are non-selected, the source driver reduces a capability for outputting the source signal or stops an output from a source signal output circuit for supplying the source signal to the subpixels.

This makes it possible to obtain an effect of reducing power consumption of the source driver in addition to the effect of reducing power consumption of the gate driver. As a result, a large reduction in power consumption can be achieved in the display device as a whole.

The display device of the present invention is arranged such that

(5) the gate driver sequentially selects the horizontal lines each including the specific color subpixel while skipping the horizontal lines each including no specific color subpixel, and
(6) in a case where a non-selection period in which the horizontal lines each including no specific color subpixel are not selected is provided immediately before a horizontal period in which the horizontal lines each including the specific color subpixel are selected, the source driver starts, from the non-selection period, supply of the source signal to a column including at least the specific color subpixel, and
(7) the source driver reduces an output capability of a source signal output circuit for supplying the source signal to the subpixels.

According to the arrangement, it is possible to further reduce power consumption of the source driver by reducing the output capability of the source signal output circuit.

Since the gate driver carries out interlace scan, there always exists a case where a non-selection period in which a horizontal line including no specific color subpixel is not selected is provided immediately before a horizontal period in which a horizontal line including the specific color subpixel is selected.

Since the source driver starts supply of a source signal from this non-selection period, the subpixels can be sufficiently charged even in a case where the output capability of the source signal output circuit is reduced.

Note that whether or not the aforementioned control in (6) and (7) is carried out also with respect to the columns each including no specific color subpixel is not essential for the feature for achieving the power reducing effect of the present invention. However, in a case where the same driving method is applied also to the columns each including no specific color subpixel (= main components of a background color), the effect of reducing power consumption becomes larger.

The display device of the present invention further includes a common driver for supplying a common electric potential to all of the subpixels, the common driver (i) carrying out common inversion driving in accordance with a timing at which a polarity of the source signal is inverted every predetermined number of horizontal periods and (ii) reducing an output capability of a common output circuit for outputting the common electric potential.

According to the arrangement, the output capability of the common output circuit is reduced. This allows a reduction in power consumption of the common driver.

As a result, it is possible to reduce power consumption of the display device. Further, in a case where this arrangement is combined with the arrangement in which the output capability of the source signal output circuit is reduced, a large reduction in power consumption can be achieved in the display device as a whole.

The display device of the present invention is arranged such that

(8) the gate driver sequentially selects the horizontal lines each including the specific color subpixel while skipping the horizontal lines each including no specific color subpixel, and

(9) in a case where a non-selection period in which the horizontal lines each including no specific color subpixel are not selected is provided immediately before a horizontal period in which the horizontal lines each including the specific color subpixel are selected, the source driver starts, from the non-selection period, supply of the source signal to a column including at least the specific color subpixel, and

(10) after an electric potential of the source signal reaches a predetermined level, the source driver reduces an output capability of a source signal output circuit for supplying the source signal to the subpixels or stops an output of the source signal output circuit.

According to the arrangement, it is possible to greatly reduce power consumption of the display device as a whole. In addition, since a timing at which the output capability of the source signal output circuit is reduced or output of the source signal output circuit is stopped is set to a timing after the electric potential of the source signal reaches the predetermined level, it is possible to reduce a risk of insufficient pixel charging while reducing power consumption.

The display device of the present invention is arranged such that a timing at which the output capability of the source signal output circuit is reduced or the output of the source signal output circuit is stopped is set within a period of time from rising to falling of a gate signal for selecting a horizontal line including the specific color subpixel.

This allows the timing at which the output capability of the source signal output circuit is reduced or the output of the source signal output circuit is stopped to be more surely set to a timing after the electric potential of the source signal reaches the predetermined level, thereby further reducing the risk of insufficient subpixel charging.

The display device of the present invention is arranged such that
the gate driver sequentially selects the horizontal lines each including the specific color subpixel while skipping the horizontal lines each including no specific color subpixel, and
the source driver (i) inverts a polarity of the source signal every predetermined number of horizontal periods and (ii) connects an even number (not less than 2) of source bus lines that are different in charging electric potential out of an even number of source bus lines to which the source signal is supplied, during a non-selection period in which the horizontal lines each including no specific color subpixel are non-selected.

According to the arrangement, in a case where the source driver drives the source bus lines while controlling the polarity of the source signal as above, the even number (not less than 2) of source bus lines charged to different electric potentials with respect to a common electric potential are connected and short-circuited in the non-selection period. This causes a high electric potential and a low electric potential to be balanced out. Accordingly, in the non-selection period, electric potentials of the source bus lines that are connected to each other are charged or discharged to an intermediate electric potential between the high and low electric potentials.

Thereafter, in the selection period, the electric potentials of the source bus lines are charged to a desired electric potential again by an output from the source driver.

This substantially reduces a load on the source driver, thereby allowing a reduction in power consumption.

Note that the even number of source bus lines to be connected are not limited to two adjacent source bus lines, and any source bus lines out of all source bus lines may be connected, provided that the number of source bus lines to be connected is an even number which allows for balance between the number of source bus lines charged to a high electric potential and the number of source bus lines charged to a low electric potential.

Note also that a period in which the source bus lines are connected to each other may be part of the non-selection period, not the whole non-selection period.

The display device of the present invention is arranged such that the gate driver prolongs an ON period of the gate signal in which ON period a horizontal line including the specific color subpixel is selected so that the ON period overlaps at least a horizontal period for a non-selected horizontal line which horizontal period is immediately before a horizontal period for the horizontal line including the specific color subpixel, out of (i) the horizontal period for the non-selected horizontal line which horizontal period is immediately before the horizontal period for the horizontal line including the specific color subpixel and (ii) a horizontal period for a non-selected horizontal line which horizontal period is immediately after the horizontal period for the horizontal line including the specific color subpixel.

This makes it possible to prolong a charging period for the subpixel, thereby producing an effect that the output capability of the source signal output circuit of the source driver can be reduced.

Further, in a case where this arrangement is combined with the aforementioned arrangement in which "an even number (not less than 2) of source bus lines that are different in charging electric potential are connected", an effect of charging or discharging between voltages applied to subpixels corresponding to connected source bus lines is produced in addition to the effect of charging or discharging between the connected source bus lines.

This further reduces the load on the source driver, thereby allowing a further reduction in power consumption.

The display device of the present invention is arranged such that the gate driver selects 1 horizontal line including the specific color subpixel every horizontal period so as to successively select all of horizontal lines including the specific color subpixel in 1 vertical period.

According to the arrangement, 1 horizontal line including the specific color subpixel is selected every horizontal period so that all of the horizontal lines each including the specific color subpixel are successively selected in 1 vertical period (1 frame). Since the horizontal lines each including no specific color subpixel are non-selected as described above, it is possible to provide, in 1 frame, a period in which the operation of the gate driver is stopped.

For example, in a case where the number of horizontal lines each including the specific color subpixel is almost same as the number of horizontal lines each including no specific color subpixel, the selection period in which the gate driver operates is about half of 1 frame, and the remaining half period is a resting period.

As a result, it is possible to achieve a low-power drive mode in which power consumption is lowered due to the resting period as compared with a normal display mode in which the gate driver sequentially drives all of the gate bus lines.

The display device of the present invention is arranged such that, in 1 vertical period, the source driver reduces a capability for outputting the source signal or stops an output from a source signal output circuit during a non-selection period in which the horizontal lines each including the specific color subpixel are not selected.

This makes it possible to obtain an effect of reducing power consumption of the source driver in addition to the effect of reducing power consumption of the gate driver.

The display device of the present invention is arranged such that a frame in which all of the horizontal lines are selected regardless of presence or absence of the specific color subpixel is periodically or non-periodically inserted.

As has been already described, in the display device of the present invention, a low power consumption is achieved by causing the horizontal lines each including no specific color subpixel to be non-selected during scanning carried out by the gate driver. However, if a state in which no signal is written into the pixels continues, there is a possibility of occurrence of a problem that reliability of liquid crystals declines.

The problem that reliability of liquid crystals declines can be avoided by selecting all of the horizontal lines or at least all of the horizontal lines each including no specific color subpixel once in several frames so that some sort of signal is written into the pixels.

The display device of the present invention may be arranged such that a plurality of frames are periodically or non-periodically inserted, and in each of the plurality of frames, (i) the horizontal lines each including the specific color subpixel are sequentially selected and (ii) one or more of the horizontal lines each including no specific color subpixel is selected so that all of the horizontal lines each including no specific color subpixel are selected throughout the plurality of frames.

This similarly makes it possible to avoid the problem that reliability of the liquid crystals declines.

Note that the order in which the one or more of the horizontal lines each including no specific color subpixel are selected in each of the plurality of frames is not limited in particular and that the number of horizontal lines selected in each of the plurality of frames need not to be same among the plurality of frames. Further, the number of frames to be inserted is not limited in particular.

The display device of the present invention is arranged such that, in the frame in which all of the horizontal lines are selected, the source driver supplies, to subpixels other than the specific color subpixel, (i) a source signal of a white voltage in a normally white mode and (ii) a source signal of a black voltage in a normally black mode.

In the low--power drive mode achieved by the present invention, it is possible to provide an image in which, for example, (i) a background is displayed in a color obtained in a case where a source signal of a low level is supplied to the subpixels of a plurality of colors other than the specific color subpixel in each of the normally white mode and the normally black mode and (ii) information is displayed in a different color obtained in a case where a source signal of a high level is supplied to the specific color subpixel.

It is therefore possible to maintain high display quality in the low-power drive mode by periodically or non-periodically rewriting the background color.

The display device of the present invention is arranged such that the source driver (i) carries out AC driving of inverting a polarity of the source signal at least every frame and (ii) at least one frame is inserted, as the frame in which all of the horizontal lines are selected, after a successive even number of frames in which only the horizontal lines each including the specific color subpixel are sequentially selected.

This allows a source signal of a positive polarity and a source signal of a negative polarity to be alternately written into the rows each including the specific color subpixel in a well-balanced manner. As a result, in a case where the display device is a liquid crystal display device, no DC component is applied to liquid crystals, thereby preventing image sticking, i.e., occurrence of an afterimage. This allows display of higher quality.

The display device of the present invention is arranged such that the source driver causes the polarity of the source signal in the frame in which all of the horizontal lines are selected to be reverse to that in a next frame in which all of the horizontal lines are selected.

As a result, in a case where the display device is a liquid crystal display device, a DC component is more unlikely to be applied to liquid crystals. This allows display of high quality without causing the problem of image sticking, i.e., occurrence of an afterimage.

The display device of the present invention is arranged such that the frame in which a successive even number of frames is inserted as the frame in which all of the horizontal lines are selected.

This allows source signals of different polarities to be written into a subpixel in the successive even number of frames in each of which all of the horizontal lines are selected. Moreover, writing of the source signals of different polarities into a subpixel can be carried out in a short period of time. Accordingly, in a case where the display device is a liquid crystal display device, a DC component is more unlikely to be applied to liquid crystals. It is therefore possible to improve the effect that image sticking, i.e., occurrence of an afterimage becomes unlikely to occur.

The display device of the present invention is arranged such that

(12) a first period, a second period following the first period, and a third period following the second period are provided, (i) the first period including a successive even number of frames in each of which all of the horizontal lines are selected regardless of presence or absence of the specific color subpixel, (ii) the second period including at least one frame in which only the horizontal lines each including the specific color subpixel are sequentially selected, and (iii) the third period including a successive even number of frames in each of which all of the horizontal lines are selected, and
(13) the source driver inverts, in the first period, the polarity of the source signal at least every frame, and
(14) inverts, in the third period, the polarity of the source signal at least every frame in a manner reverse to that in the first period.

In a case where the first period and the third period are provided as above, writing of a source signal of a positive polarity and writing of a source signal of a negative polarity into all of the horizontal lines can be alternated not only in a short period of time but also in a long period of time.

As a result, in a case where the display device is a liquid crystal display device, a DC component is more unlikely to be applied to liquid crystals. It is therefore possible to further improve the effect that image sticking, i.e., occurrence of an afterimage becomes more unlikely to occur.

The display device of the present invention is arranged such that

when a drive mode shifts from a normal drive mode in which all of the horizontal lines are selected to a low-power drive mode in which only the horizontal lines each including the specific color subpixel are selected,

(15) at least one frame in which a white voltage is written into all of the subpixels constituting the display screen is inserted in a normally white mode and
(16) at least one frame in which a black voltage is written into all of the subpixels constituting the display screen is inserted in a normally black mode.

According to the arrangement, in each of the normally white mode and the normally black mode, electric potentials of all of the subpixels to be driven are initialized to a low level at the time of shift from the normal drive mode to the low-power drive mode. This makes it possible to determine a background color. Further, even if a DC component which causes an afterimage remains in any of the subpixels, it is possible to eliminate the DC component.

As a result, it is possible to maintain high display quality in the low-power drive mode.

The display device of the present invention is arranged such that the number of frames to be inserted in which the white voltage or the black voltage is written is more than 1, and the source driver inverts, in the frames thus inserted, the polarity of the source signal at least every frame.

Since the polarity of the source signal is inverted at least every frame in the plurality of frames thus inserted, it is possible to more surely eliminate the DC component.

The display device of the present invention is arranged such that when a drive mode shifts from a normal drive mode in which all of the horizontal lines are selected to a low-power drive mode in which only the horizontal lines each including the specific color subpixel are selected, a plurality of frames are inserted in which the number of non-selected horizontal lines each including no specific color subpixel gradually increases.

In a case where the drive mode is switched from the normal drive mode to the low-power drive mode in a frame subsequent to a frame of the normal drive mode, a change of display instantaneously occurs. Meanwhile, according to the arrangement, a change of display at the time of mode shift becomes gradual since frames of an intermediate drive mode are inserted between a frame of the normal drive mode and a frame of the low-power drive mode. As a result, it is possible to provide a display device which does not give a user a sense of strangeness at the time of mode shift.

The display device of the present invention is arranged such that each of the pixels is a pixel which is made up of two rows and two columns of subpixels and in which subpixels having colors of a relatively high absolute luminance ratio are diagonally disposed.

In the normal drive mode in which all of the horizontal lines are selected in all of the frames, in a case where subpixels having a high absolute luminance ratio are disposed in an identical horizontal line, a luminance difference between the horizontal line and the other horizontal line in which subpixels having a low absolute luminance ratio are disposed becomes large.

It is possible to prevent occurrence of such luminance difference in the normal drive mode by diagonally disposing subpixels of colors (e.g., white and green) having a relatively high absolute luminance ratio.

The display device of the present invention is arranged such that
each of the pixels is a pixel which is made up of two rows and two columns of subpixels and in which a plurality of subpixels aligned in a horizontal line including no specific color subpixel are subpixels having colors of a relatively low absolute luminance ratio.

In the low-power drive mode of the present invention, there is a case where no voltage is applied, over a plurality of frame periods, to subpixels aligned in a horizontal line including no specific color subpixel. It is therefore feared that a fluctuation of luminance occurs in the non-selected horizontal line due to leakage of an applied voltage.

Accordingly, in a case where subpixels of colors (e.g., red and blue) having a low absolute luminance are aligned in a horizontal line including no specific color subpixel, it is possible to prevent a decline in display quality in the low-power drive mode.

The display device of the present invention is arranged such that a region in which the horizontal lines each including no specific color subpixel are non-selected and the horizontal lines each including the specific color subpixel are selected is part of a whole region of the display screen.

Accordingly, even in a case where monochrome display is carried out only in part of the display screen as a content displayed on the display screen, it is possible to reduce power consumption by applying the low-power drive mode of the present invention to the part of the display screen.

The following is a supplementary description concerning the feature of the display driving method.

In the display driving method of the present invention, a capability for outputting a source signal supplied to the subpixels aligned in a column direction is reduced or an output from a source signal output circuit for supplying the source signal to the subpixels is stopped during a non-selection period in which the horizontal lines each including no specific color subpixel are not selected.

This makes it possible to obtain an effect of reducing power consumption of the source driver in addition to the effect of reducing power consumption of the gate driver. As a result, a large reduction in power consumption can be achieved in a display device as a whole.

The present invention is not limited to the description of the embodiments above, but may be altered by a skilled person within the scope of the claims. An embodiment based on a proper combination of technical means disclosed in different embodiments is encompassed in the technical scope of the present invention.

Industrial Applicability

The present invention is applicable to (i) a display device including a display screen on which pixels for displaying a single color by a combination of a plurality of basic colors are two -dimensionally disposed and (ii) a display driving method for the display device.

Reference Signs List

    3: Gate driver
    4: Source driver
    4a: Operational amplifier (source signal output circuit)
    6: External driving circuit
    7: Common electrode driving circuit (common driver)
    R, G, B: Subpixels (subpixels other than specific color subpixel)
    W: Subpixel (specific color subpixel)
    Gn: Gate bus line
    Sm: Source bus line

**Claims**

1.  A display device comprising:

    a display screen in which pixels each made up of at least two rows and two columns of subpixels corresponding to a plurality of colors are two-dimensionally disposed so that a desired color is displayed by a combination of the plurality of colors;
    a source driver for driving source bus lines each of which supplies a source signal to subpixels, out of the subpixels, that are aligned in a column direction; and
    a gate driver for driving gate bus lines each of which supplies a gate signal for selecting subpixels, out of the subpixels, that are aligned in a row direction,
    the gate driver driving the gate bus lines so that, out of horizontal lines which are scanned by the gate driver and in each of which subpixels are aligned in the row direction, (i) horizontal lines each including a specific color subpixel are selected and (ii) horizontal lines each including no specific color subpixel are non-selected, the specific color subpixel being a subpixel of a specific color for which driving is desired.

2. The display device according to claim 1, wherein the gate driver sequentially selects the horizontal lines each including the specific color subpixel while skipping the horizontal lines each including no specific color subpixel.

3. The display device according to claim 1 or 2, wherein, during a period in which the horizontal lines each including no specific color subpixel are non-selected, the source driver reduces a capability for outputting the source signal or stops an output from a source signal output circuit for supplying the source signal to the subpixels.

4. The display device according to claim 1 or 2, wherein:

the gate driver sequentially selects the horizontal lines each including the specific color subpixel while skipping the horizontal lines each including no specific color subpixel, and
in a case where a non-selection period in which the horizontal lines each including no specific color subpixel are not selected is provided immediately before a horizontal period in which the horizontal lines each including the specific color subpixel are selected, the source driver starts, from the non-selection period, supply of the source signal to a column including at least the specific color subpixel, and
the source driver reduces an output capability of a source signal output circuit for supplying the source signal to the subpixels.

5. The display device according to any one of claims 1 through 3, further comprising a common driver for supplying a common electric potential to all of the subpixels,
the common driver (i) carrying out common inversion driving in accordance with a timing at which a polarity of the source signal is inverted every predetermined number of horizontal periods and (ii) reducing an output capability of a common output circuit for outputting the common electric potential.

6. The display device according to claim 1 or 2, wherein:

the gate driver sequentially selects the horizontal lines each including the specific color subpixel while skipping the horizontal lines each including no specific color subpixel, and
in a case where a non-selection period in which the horizontal lines each including no specific color subpixel are not selected is provided immediately before a horizontal period in which the horizontal lines each including the specific color subpixel are selected, the source driver starts, from the non-selection period, supply of the source signal to a column including at least the specific color subpixel, and
after an electric potential of the source signal reaches a predetermined level, the source driver reduces an output capability of a source signal output circuit for supplying the source signal to the subpixels or stops an output of the source signal output circuit.

7. The display device according to claim 6, wherein a timing at which the output capability of the source signal output circuit is reduced or the output of the source signal output circuit is stopped is set within a period of time from rising to falling of a gate signal for selecting a horizontal line including the specific color subpixel.

8. The display device according to claim 1, wherein:

the gate driver sequentially selects the horizontal lines each including the specific color subpixel while skipping the horizontal lines each including no specific color subpixel, and
the source driver (i) inverts a polarity of the source signal every predetermined number of horizontal periods and (ii) connects an even number (not less than 2) of source bus lines that are different in charging electric potential out of an even number of source bus lines to which the source signal is supplied, during a non-selection period in which the horizontal lines each including no specific color subpixel are non-selected.

9. The display device according to any one of claims 1 through 8, wherein the gate driver prolongs an ON period of the gate signal in which ON period a horizontal line including the specific color subpixel is selected so that the ON period overlaps at least a horizontal period for a non-selected horizontal line which horizontal period is immediately before a horizontal period for the horizontal line including the specific color subpixel, out of (i) the horizontal period for the non-selected horizontal line which horizontal period is immediately before the horizontal period for the horizontal line including the specific color subpixel and (ii) a horizontal period for a non-selected horizontal line which horizontal period is immediately after the horizontal period for the horizontal line including the specific color subpixel.

10. The display device according to claim 1, wherein the gate driver selects 1 horizontal line including the specific color subpixel every horizontal period so as to successively select all of horizontal lines including the specific color subpixel in 1 vertical period.

11. The display device according to claim 10, wherein, in 1 vertical period, the source driver reduces a capability for outputting the source signal or stops an output from a source signal output circuit during a non-selection period in which the horizontal lines each including the specific color subpixel are not selected.

12. The display device according to any one of claims 1 through 11, wherein a frame in which all of the horizontal lines are selected regardless of presence or absence of the specific color subpixel is periodically or non-periodically inserted.

13. The display device according to any one of claims 1 through 11, wherein:

    a plurality of frames are periodically or non-periodically inserted, and
    in each of the plurality of frames, (i) the horizontal lines each including the specific color subpixel are sequentially selected and (ii) one or more of the horizontal lines each including no specific color subpixel is selected so that all of the horizontal lines each including no specific color subpixel are selected throughout the plurality of frames.

14. The display device according to claim 12, wherein, in the frame in which all of the horizontal lines are selected, the source driver supplies, to subpixels other than the specific color subpixel, (i) a source signal of a white voltage in a normally white mode and (ii) a source signal of a black voltage in a normally black mode.

15. The display device according to claim 12 or 14, wherein the source driver (i) carries out AC driving of inverting a polarity of the source signal at least every frame and (ii) at least one frame is inserted, as the frame in which all of the horizontal lines are selected, after a successive even number of frames in which only the horizontal lines each including the specific color subpixel are sequentially selected.

16. The display device according to claim 12, 14, or 15, wherein the source driver causes the polarity of the source signal in the frame in which all of the horizontal lines are selected to be reverse to that in a next frame in which all of the horizontal lines are selected.

17. The display device according to any one of claims 12 and 14 through 16, wherein a successive even number of frames are inserted as the frame in which all of the horizontal lines are selected.

18. The display device according to any one of claims 12 and 14 through 16, wherein:

a first period, a second period following the first period, and a third period following the second period are provided, (i) the first period including a successive even number of frames in each of which all of the horizontal lines are selected regardless of presence or absence of the specific color subpixel, (ii) the second period including at least one frame in which only the horizontal lines each including the specific color subpixel are sequentially selected, and (iii) the third period including a successive even number of frames in each of which all of the horizontal lines are selected, and
the source driver inverts, in the first period, the polarity of the source signal at least every frame, and inverts, in the third period, the polarity of the source signal at least every frame in a manner reverse to that in the first period.

19. The display device according to any one of claims 1 through 18, wherein:

    when a drive mode shifts from a normal drive mode in which all of the horizontal lines are selected to a low-power drive mode in which only the horizontal lines each including the specific color subpixel are selected, (i) at least one frame in which a white voltage is written into all of the subpixels constituting the display screen is inserted in a normally white mode and (ii) at least one frame in which a black voltage is written into all of the subpixels constituting the display screen is inserted in a normally black mode.

20. The display device according to 19, wherein:

    the number of frames to be inserted in which the white voltage or the black voltage is written is more than 1, and
    the source driver inverts, in the frames thus inserted, the polarity of the source signal at least every frame.

21. The display device according to any one of claims 1 through 20, wherein:

    when a drive mode shifts from a normal drive mode in which all of the horizontal lines are selected to a low-power drive mode in which only the horizontal lines each including the specific color subpixel are selected, a plurality of frames are inserted in which the number of non-selected horizontal lines each including no specific color subpixel gradually increases.

22. The display device according to any one of claims 1 through 21, wherein:

each of the pixels is a pixel which is made up of two rows and two columns of subpixels and in which subpixels having colors of a relatively high absolute luminance ratio are diagonally disposed.

23. The display device according to any one of claims 1 through 21, wherein:

each of the pixels is a pixel which is made up of two rows and two columns of subpixels and in which a plurality of subpixels aligned in a horizontal line including no specific color subpixel are subpixels having colors of a relatively low absolute luminance ratio.

24. The display device according to any one of claims 1 through 23, wherein a region in which the horizontal lines each including no specific color subpixel are non-selected and the horizontal lines each including the specific color subpixel are selected is part of a whole region of the display screen.

25. A display driving method for driving a display device in which a plurality of pixels are two-dimensionally disposed on a display screen and each of the plurality of pixels is made up of at least two rows and two columns of subpixels corresponding to a plurality of colors so that a desired color is displayed by a combination of the plurality of colors, comprising the step of:

scanning horizontal lines in each of which subpixels are aligned in a row direction so that, out of the horizontal lines, (i) horizontal lines each including a specific color subpixel are selected and (ii) horizontal lines each including no specific color subpixel are non-selected, the specific color subpixel being a subpixel of a specific color for which driving is desired.

26. The display driving method according to claim 25, wherein a capability for outputting a source signal supplied to the subpixels aligned in a column direction is reduced or an output from a source signal output circuit for supplying the source signal to the subpixels is stopped during a non-selection period in which the horizontal lines each including no specific color subpixel are not selected.

FIG. 1

F I G. 2

FIG. 3

FIG. 4

FIG. 5

F I G. 6

EP 2 549 466 A1

FIG. 7

EMBODIMENT 1-5, 1-6

k-th FRAME    (k+1)th FRAME

Gn
Gn+1
Gn+2
Gn+3
Gn+4
Gn+5
COM
Sm
Sm+1
Sm+2
Sm+3
Sm+4

FIG. 8

Gn+5

Sm

t

FIG. 9

EMBODIMENT 1-7

(a)

k-th FRAME

(k+1)th FRAME

Gn

Gn+1

Gn+2

Gn+3

Gn+4

Gn+5

COM

Sm

Sm+1

Sm+2

Sm+3

Sm+4

INTERMEDIATE ELECTRIC POTENTIAL

(b)

COM Sm+1

Sm

FIG. 10

F I G. 1 1

EMBODIMENT 2-1, 2-2

(a)

NORMAL SCAN

(b)

INTERLACE SCAN

(c)

EMBODIMENT
2-1, 2-2

F I G. 1 2

EMBODIMENT 3-1-A

## FIG. 13

EMBODIMENT 3-1-B

| | (k−1)th FRAME | k−th FRAME | (k+1)th FRAME | ····· | (k+j)th FRAME | (k+j+1)th FRAME | (k+j+2)th FRAME |
|---|---|---|---|---|---|---|---|
| | SCAN ONLY LINES INCLUDING PIXEL W | SCAN ALSO ONE OR MORE OF LINES INCLUDING NO PIXEL W | SCAN ALSO DIFFERENT ONE OR MORE OF LINES INCLUDING NO PIXEL W | | SCAN ALSO DIFFERENT ONE OR MORE OF LINES INCLUDING NO PIXEL W | SCAN ONLY LINES INCLUDING PIXEL W | SCAN ONLY LINES INCLUDING PIXEL W |

EP 2 549 466 A1

F I G. 1 4

TRANSMITTANCE [%]

V-T CHARACTERISTIC OF
NORMALLY BLACK LIQUID CRYSTAL

V-T CHARACTERISTIC OF
NORMALLY WHITE LIQUID CRYSTAL

LIQUID CRYSTAL APPLIED VOLTAGE [V]

# F I G. 1 5

EMBODIMENT 3-3

| (k-1)th FRAME | k-th FRAME | (k+1)th FRAME | (k+2)th FRAME | ... | (k+j-1)th FRAME | (k+j)th FRAME | (k+j+1)th FRAME |
|---|---|---|---|---|---|---|---|
| SCAN ONLY LINES INCLUDING PIXEL W | SCAN ALL LINES | SCAN ONLY LINES INCLUDING PIXEL W | SCAN ONLY LINES INCLUDING PIXEL W | ... | SCAN ONLY LINES INCLUDING PIXEL W | SCAN ALL LINES | SCAN ONLY LINES INCLUDING PIXEL W |

Gn

Gn+1

Gn+2

Gn+3

Gn+4

Gn+5

F I G. 1 6

EMBODIMENT 3-4

FIG. 17

EMBODIMENT 3-5

| (k-1)th FRAME | k-th FRAME | (k+1)th FRAME | (k+2)th FRAME | (k+3)th FRAME | ... |
|---|---|---|---|---|---|
| SCAN ONLY LINES INCLUDING PIXEL W | SCAN ALL LINES | SCAN ALL LINES | SCAN ONLY LINES INCLUDING PIXEL W | SCAN ONLY LINES INCLUDING PIXEL W | |

FIG. 18

EMBODIMENT 3-6

FIG. 19

EMBODIMENT 4-1

| | (n-1)th FRAME | n-th FRAME | (n+1)th FRAME | (n+2)th FRAME | (n+3)th FRAME |
|---|---|---|---|---|---|
| DISPLAY STATE | COLOR DISPLAY | WHITE VOLTAGE WRITING | MONOCHROME DISPLAY DRIVE | MONOCHROME DISPLAY DRIVE | MONOCHROME DISPLAY DRIVE |

DRIVE MODE CONTROL SIGNAL
(INPUT SIGNAL TO SOURCE Dr/COMMON ELECTRODE DRIVING CIRCUIT)

| SCANNING STATE | SCAN ALL LINES | SCAN ALL LINES | INTERLACE SCAN | INTERLACE SCAN | INTERLACE SCAN |
|---|---|---|---|---|---|

EP 2 549 466 A1

F I G. 2 O

EMBODIMENT 4-2

| | (n−1)th FRAME | n−th FRAME | (n+1)th FRAME | (n+2)th FRAME | (n+3)th FRAME |
|---|---|---|---|---|---|
| DISPLAY STATE | COLOR DISPLAY | WHITE VOLTAGE WRITING | WHITE VOLTAGE WRITING (POLARITY INVERTED) | LOW VOLTAGE DRIVE | LOW VOLTAGE DRIVE |

DRIVE MODE CONTROL SIGNAL

(INPUT SIGNAL TO SOURCE Dr/COMMON ELECTRODE DRIVING CIRCUIT)

| SCANNING STATE | SCAN ALL LINES | SCAN ALL LINES | SCAN ALL LINES | INTERLACE SCAN | INTERLACE SCAN |
|---|---|---|---|---|---|

F I G. 2 1

EMBODIMENT 4-3

| | (n−1)th FRAME | n-th FRAME | (n+1)th FRAME | (n+2)th FRAME | ... | (n+k)th FRAME |
|---|---|---|---|---|---|---|
| DISPLAY STATE | COLOR DISPLAY | SHIFT PERIOD (MONOCHROME DISPLAY DRIVE) | SHIFT PERIOD (MONOCHROME DISPLAY DRIVE) | SHIFT PERIOD (MONOCHROME DISPLAY DRIVE) | ... | MONOCHROME DISPLAY DRIVE |

DRIVE MODE CONTROL SIGNAL
(INPUT SIGNAL TO SOURCE Dr/COMMON ELECTRODE DRIVING CIRCUIT)

EP 2 549 466 A1

FIG. 22

EMBODIMENT 5-1

(a)

(b)

FIG. 23

EMBODIMENT 5-2

(a)

(b)

F I G. 2 4

EMBODIMENT 6

SCREEN DISPLAY STATE

NORMAL DRIVE { NORMAL DISPLAY REGION

LOW-POWER DRIVE { MONOCHROME DISPLAY REGION

NORMAL DRIVE { NORMAL DISPLAY REGION

FIG. 25

FIG. 26

FIG. 27

FIG. 28

FIG. 29

F I G .  3 0

F I G .  3 1

<div align="center">

**INTERNATIONAL SEARCH REPORT**

</div>

| | International application No. |
|---|---|
| | PCT/JP2010/071508 |

A. CLASSIFICATION OF SUBJECT MATTER
*G09G3/36*(2006.01)i, *G02F1/133*(2006.01)i, *G09G3/20*(2006.01)i

According to International Patent Classification (IPC) or to both national classification and IPC

B. FIELDS SEARCHED

Minimum documentation searched (classification system followed by classification symbols)
G09G3/00-5/42, G02F1/133, G09G3/20

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2009-175468 A  (Hitachi Displays, Ltd.), 06 August 2009 (06.08.2009), entire text; fig. 1 to 22 & US 2009/0189881 A1    & CN 101494020 A | 1-26 |
| A | JP 2008-197228 A  (Hitachi Displays, Ltd.), 28 August 2008 (28.08.2008), entire text; fig. 1 to 13 & US 2008/0198185 A1    & KR 10-2008-0074743 A & CN 101241666 A | 1-26 |
| A | JP 2003-162263 A  (Casio Computer Co., Ltd.), 06 June 2003 (06.06.2003), entire text; fig. 1 to 15 (Family: none) | 1-26 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 January, 2011 (06.01.11) | 18 January, 2011 (18.01.11) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| | International application No. |
|---|---|
| | PCT/JP2010/071508 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2009-230079 A  (Toshiba Corp.),<br>08 October 2009 (08.10.2009),<br>entire text; fig. 1 to 13<br>(Family: none) | 1-26 |
| A | JP 2006-350392 A  (Rohm Co., Ltd.),<br>28 December 2006 (28.12.2006),<br>entire text; fig. 1 to 12<br>(Family: none) | 1-26 |

Form PCT/ISA/210 (continuation of second sheet) (July 2009)

**EP 2 549 466 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10228263 A